# EUROPEAN PATENT SPECIFICATION

(11) **EP 3 579 965 B1**
(45) Date of publication and mention of the grant of the patent: **05.04.2023**
(21) Application number: 18751811.3
(22) Date of filing: 07.02.2018
(51) Int. Cl.: B01J 41/05, C08F 2/12, C08F 220/06, C08F 220/56, C08J 9/28, G01N 1/36, C02F 1/42, C02F 1/48, C02F 101/30, B01J 41/14, C08F 2/20, C08F 2/44

(54) **POLYMER BEADS AND APPLICATION THEREOF**
POLYMERPERLEN UND ANWENDUNG DAVON
BILLES DE POLYMÈRE ET APPLICATION DE CELLES-CI

(30) Priority: 09.02.2017 AU 2017900397
(43) Date of publication of application: 18.12.2019
(73) Proprietor: IXOM Operations Pty Ltd, East Melbourne VIC 3002 (AU)
(72) Inventor: RAYMOND, Matthew Roy, Carlton, Victoria 3053 (AU)
(74) Representative: V.O.
(86) International application number: PCT/AU2018/050089
(87) International publication number: WO 2018/145152

(56) References cited:
- CN-A- 103 881 023
- CN-A- 105 061 663
- CN-A- 105 884 985
- US-A- 5 855 790
- US-A1- 2005 224 413
- US-A1- 2013 341 554
- US-A1- 2015 218 015
- XUE, P. et al.: "Hydrophilic porous magnetic poly(GMA-MBAA-NVP) composite microspheres containing oxirane groups: An efficient carrier for immobilizing penicillin G acylase", Journal of Magnetism and Magnetic Materials, vol. 378, 2015, pages 306-312, XP055532695,
- ZARE, F. et al.: "Magnetic molecularly imprinted polymer for the efficient and selective preconcentration of diazinon before its determination by high-performance liquid chromatography", Journal of Separation Science, vol. 38, no. 16, 2015, pages 2797-2803, XP055532708,
- KOUBKOVA, J. et al.: "Magnetic poly(glycidyl methacrylate) microspheres for protein capture", New Biotechnology, vol. 31, no. 5, 2014, pages 482-491, XP055532714,

## Description

### FIELD OF THE INVENTION

The present invention relates in general to polymer beads, to a process for preparing the same, and to the application thereof. The polymer beads are particularly suitable for use in removing undesirable contaminants from water, and accordingly it will be convenient to describe the invention herein with reference to this application. However, it is to be understood the polymer beads may also be used in other applications.

### BACKGROUND OF THE INVENTION

Over large parts of the world, humans have inadequate access to potable water. Significant research has therefore been directed toward developing products and processes for removing contaminants from water to render it potable.

For example, polymer beads have been applied in the treatment of water contaminated with dissolved organic carbon (DOC). In that case, DOC within water can adsorb onto the surface of the polymer beads. The polymer beads may also be provided with ion exchange capacity to provide for what is commonly referred to in the art as an ion exchange resin. Providing the polymer beads with ion exchange capacity can enhance their contaminant removal efficiency.

In use, polymer beads, with or without ion exchange capacity, can be packed into a column and the contaminated water passed through the column for purification. However, this "packed column" approach to removing contaminants from water can be limited in its efficiency.

An alternative approach to applying the polymer beads, with or without ion exchange capacity, involves stirring polymer beads with the contaminated water in a tank. This approach allows the polymer beads to have maximum contact with the contaminated water. However, subsequent separation of the polymer beads (which are typically quite small) from the water can prove problematic.

To enhance the removal of contaminants from water, the polymer beads may be provided with porosity which increases their surface area that makes contact with the contaminated water.

Polymer beads having solid particulate material distributed therethrough can enhance the ease of their separation from water by increasing the density of the polymer bead and/or by providing another property such as magnetic susceptibility that can be used to separate the polymer beads from the water.

WO 96/07675 discloses polymer beads incorporating solid particulate material. The polymer beads may be provided with ion exchange capacity, and were found to be effective at removing contaminants, such as DOC, from water.

US 2013/341554 A1 relates to an acrylic strongly basic anion exchange microsphere resin containing magnetic grains and a group containing quaternary ammonium salts. The manufacturing is: taking acrylic compounds as the monomer and mixing it with the cross linking agent and porogenic agent to form an oil phase; evenly mixing the oil phase with magnetic grains and then conducting suspension polymerization; aminating and alkylating the polymerized magnetic grains so as to form the quaternary ammonium salts, namely the magnetic, acrylic strongly basic anion exchange microsphere resin. US 2005/224413 A1 relates to water treatment, in particular to a process for the removal of dissolved organic carbon from water. The process involves an ion-exchange resin which is prepared using divinylbenzene.

Despite the existence of effective polymer beads suitable for use in removing contaminants from water, there remains an opportunity to develop new polymer bead technology that improves upon, or at least provides a useful alternative to, known polymer bead technology.

### SUMMARY OF THE INVENTION

The present invention is set out in the appended claims. The invention provides a process for producing polymer beads having a porous polymeric matrix in which is distributed solid particulate material; the process comprising:
(i) providing a dispersion having a dispersed phase and a continuous phase, the dispersed phase comprising:
   (a) polymerisable monomer composition,
   (b) solid particulate material,
   (c) non-polymeric porogen; and
   (d) no polymeric porogen;
      wherein the polymerisable monomer composition comprises;
   (e) at least one mono-ethylenically unsaturated monomer, and
   (f) at least one crosslinking monomer having at least two ethylenically unsaturated groups that are separated by at least 4 consecutive acyclic atoms; and
(ii) polymerising the polymerisable monomer composition in the presence of the non-polymeric porogen and solid particulate material to form the porous polymeric matrix of the beads.

Surprisingly, it has now been found polymer beads produced in accordance with the invention demonstrate superior ability to remove contaminants from water relative to other known comparable polymer beads. Without wishing to be limited by theory it believed using the specified crosslinking monomer in combination with a non-polymeric porogen and no polymeric porogen affords a particular morphology to the polymeric matrix of the polymer beads that surprisingly enhances contaminate, such as DOC, removal from water. That morphology is also believed to surprisingly impart improved mechanical properties to the so form beads.

In one embodiment, the so formed polymer beads are subjected to a cleaning step to remove non-polymeric porogen from the polymeric matrix of the polymer beads.

The present invention also provides polymer beads comprising a porous polymeric matrix having distributed therethrough solid particulate material, the polymeric matrix (i) comprising polymerised monomer residues of (a) at least one mono-ethylenically unsaturated monomer, and (b) at least one crosslinking monomer having at least two ethylenically unsaturated groups separated by at least 4 consecutive acyclic atoms, wherein the polymeric matrix comprises non-polymeric porogen and no polymeric porogen.

The present invention further provides polymer beads comprising a porous polymeric matrix having distributed therethrough solid particulate material, the polymeric matrix (i) comprising polymerised monomer residues of (a) at least one mono-ethylenically unsaturated monomer, and (b) at least one crosslinking monomer having at least two ethylenically unsaturated groups separated by at least 4 consecutive acyclic atoms, wherein the polymeric matrix comprises no porogen.

Those skilled in the art will be familiar with the use of porogens in preparing polymer beads to impart porosity throughout the polymer matrix of the polymer beads. Unexpectedly, use of non-polymeric porogen in combination with the specified crosslinking monomer according to invention gives rise to a morphology of the polymer beads that advantageously exhibits (i) an improved ability for removing contaminants, such as DOC, from water, and (ii) improved mechanical properties.

According to the invention, the dispersed phase is an organic phase and the continuous phase is an aqueous phase. The dispersed organic phase comprises the solid particulate material.

According to the invention, the polymer beads are provided with ion exchange capacity. The polymer beads are produced using a polymerisable monomer composition comprising one or more functional monomers having a functional group that upon reaction provides, the polymeric matrix of the beads with ion exchange sites.

The present invention also provides a method of treating an aqueous solution, the method comprising contacting said aqueous solution with polymer beads of, or prepared in accordance with, the present invention. Treatment of the aqueous solution may involve removing contaminants form the solution such as DOC.

The present invention further provides a method of separating ions from an aqueous solution, the method comprising contacting the solution with polymer beads of, or prepared in accordance with, the present invention, having ion exchange capacity,

Further aspects and/or embodiments of the invention are described in more detail below.

### BRIEF DESCRIPTION OF THE DRAWINGS

The invention will herein be described with reference to the following non-limiting drawings in which:
Figure 1 is an SEM image showing a moderately smooth surface morphology of a polymer bead in accordance with the invention;
Figure 2 is an SEM image showing a pitted surface morphology of a polymer bead prepared using polymeric porogen and trimethylolpropane trimethacrylate (i.e. TMPTMA crosslinking monomer);
Figure 3 not according to the invention is an SEM image showing a very smooth surface morphology of a polymer bead prepared using non-polymeric porogen and divinyl benzene (i.e. crosslinking monomer);
Figure 4 graphically illustrates DOC removal performance from three different United States originating water samples A, B, and C using polymer beads of the type shown in Figure 1 (New Resin - according to the invention), Figure 2 (PP Resin - comparative) and Figure 3 (Old Resin - comparative).
Figure 5 graphically illustrates DOC removal performance from an Australian originating water sample using polymer beads of the type shown in Figure 1 (New Resin - according to the invention) and Figure 3 (Old Resin - comparative).

### DETAILED DESCRIPTION OF THE INVENTION

The polymer beads according to the invention have a porous polymeric matrix. By having a "porous" polymeric matrix is meant the polymeric matrix that forms the bead structure has internal and surface pores (voids).

The polymer beads according to the invention have a porous polymeric matrix in which is distributed solid particulate material. By the solid particulate material being "distributed" in the porous polymeric matrix is meant the solid particulate material is contained within and spread throughout the polymeric matrix per se (i.e. not merely located within a pore space of the polymeric matrix).

As will be discussed in more detail below, the polymeric matrix of the polymer beads is formed from a polymerisable monomer composition and therefore comprises as part of its molecular structure polymerised monomer residues from that composition.

The process according to the invention involves providing a dispersion having a dispersed phase and a continuous phase. The dispersion may be prepared according to techniques well known in the art. For example, the dispersion may be prepared in a manner suitable for performing well known techniques of dispersion or suspension polymerisation.

Those skilled in the art will appreciate that in order to prevent the dispersed phase of the dispersion from coalescing it may be desirable to use a stabiliser. The type of stabiliser used will depend on the nature of both the dispersed and continuous phases. Suitable stabilisers that may be used to prevent the dispersed phase from coalescing include, but are not limited to, polyvinyl alcohol, gelatine, methyl cellulose, sodium polyacrylate, or combinations thereof.

The stabiliser is typically used in an amount of about 0.01 to about 5 wt%, for example from about 0.05 to about 2.0 wt%, based on the weight of the entire dispersion.

According to the invention, the dispersed phase is an organic phase and the continuous phase is an aqueous phase. The process comprises providing a dispersion having a dispersed organic phase and a continuous aqueous phase.

The dispersed phase comprises polymerisable monomer composition. The polymerisable monomer composition itself comprises at least one mono-ethylenically unsaturated monomer.

By "mono-ethylenically unsaturated monomer" is meant monomer having one double bond that is capable of being polymerised to form polymer. Suitable monomers are those which can be polymerised by free radical process. The monomers should also be capable of being polymerised with other monomers. Factors that determine copolymerisability of various monomers are well documented in the art. For example, see: Greenlee, R.Z., in Polymer Handbook 3rd Edition (Brandup, J., and Immergut. E.H. Eds) Wiley: New York, 1989 p II/53. Such monomers include those with the general formula (I): 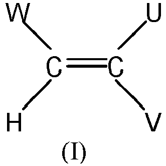
where U and W are independently selected from -CO₂H, -CO₂R¹, -COR¹, -CSR¹, - CSOR¹, -COSR¹, -CONH₂, -CONHR¹, -CONR¹₂, hydrogen, halogen and optionally substituted C₁-C₄ alkyl or U and W form together a lactone, anhydride or imide ring that may itself be optionally substituted, where the optional substituents are independently selected from hydroxy, -CO₂H, -CO₂R¹, -COR¹, -CSR¹, -CSOR¹, -COSR¹, -CN, - CONH₂, -CONHR¹,
-CONR¹₂, -OR¹, -SR¹, -O₂CR¹, -SCOR¹, and -OCSR¹;
V is selected from hydrogen, R¹, -CO₂H, -CO₂R¹, -COR¹, -CSR¹, -CSOR¹, -COSR¹, -CONH₂, -CONHR¹, -CONR¹₂, -OR¹, -SR¹, -O₂CR¹, -SCOR¹, and -OCSR¹;
where the or each R¹ is independently selected from optionally substituted alkyl, optionally substituted alkenyl, optionally substituted alkynyl, optionally substituted aryl, optionally substituted heteroaryl, optionally substituted carbocyclyl, optionally substituted heterocyclyl, optionally substituted arylalkyl, optionally substituted heteroarylalkyl, optionally substituted alkylaryl, optionally substituted alkylheterocyclyl, optionally substituted alkylheteroaryl, and an optionally substituted polymer chain.

The or each R¹ may also be independently selected from optionally substituted C₁-C₂₂ alkyl, optionally substituted C₂-C₂₂ alkenyl, optionally substituted C₂-C₂₂ alkynyl, optionally substituted C₆-C₁₈ aryl, optionally substituted C₃-C₁₈ heteroaryl, optionally substituted C₃-C₁₈ carbocyclyl, optionally substituted C₂-C₁₈ heterocyclyl, optionally substituted C₇-C₂₄ arylalkyl, optionally substituted C₄-C₁₈ heteroarylalkyl, optionally substituted C₇-C₂₄ alkylaryl, optionally substituted C₁-C₁₂ alkylheterocyclyl, optionally substituted C₄-C₁₈ alkylheteroaryl, and an optionally substituted polymer chain. Examples polymer chains include those selected from polyalkylene oxide, polyarylene ether and polyalkylene ether.

In one embodiment, R¹ may be independently selected from optionally substituted C₁-C₆ alkyl.

Examples of mono-ethylenically unsaturated monomers include, but are not limited to, maleic anhydride, N-alkylmaleimide, N-arylmaleimide, dialkyl fumarate and cyclopolymerisable monomers, acrylate and methacrylate esters, acrylic and methacrylic acid, styrene, acrylamide, methacrylamide, and methacrylonitrile, mixtures of these monomers, and mixtures of these monomers with other monomers.

Other examples of useful mono-ethylenically unsaturated monomers include the following:
methyl methacrylate, ethyl methacrylate, propyl methacrylate (all isomers), butyl methacrylate (all isomers), 2-ethylhexyl methacrylate, isobornyl methacrylate, methacrylic acid, benzyl methacrylate, phenyl methacrylate, methacrylonitrile, alpha-methylstyrene, methyl acrylate, ethyl acrylate, propyl acrylate (all isomers), butyl acrylate (all isomers), 2-ethylhexyl acrylate, isobornyl acrylate, acrylic acid, benzyl acrylate, phenyl acrylate, acrylonitrile, styrene, functional methacrylates, acrylates and styrenes selected from glycidyl methacrylate, 2-hydroxyethyl methacrylate, hydroxypropyl methacrylate (all isomers), hydroxybutyl methacrylate (all isomers), N,N-dimethylaminoethyl methacrylate, N,N-diethylaminoethyl methacrylate, triethyleneglycol methacrylate, itaconic anhydride, itaconic acid, glycidyl acrylate, 2-hydroxyethyl acrylate, hydroxypropyl acrylate (all isomers), hydroxybutyl acrylate (all isomers), N,N-dimethylaminoethyl acrylate, N,N-diethylaminoethyl acrylate, triethyleneglycol acrylate, methacrylamide, N-methylacrylamide, N,N-dimethylacrylamide, N-tert-butylmethacrylamide, N-n-butylmethacrylamide, N-methylolmethacrylamide, N-ethylolmethacrylamide, N-tert-butylacrylamide, N-n-butylacrylamide, N-methylolacrylamide, N-ethylolacrylamide, vinyl benzoic acid (all isomers), diethylamino styrene (all isomers), alpha-methylvinyl benzoic acid (all isomers), diethylamino alpha-methylstyrene (all isomers), p-vinylbenzene sulfonic acid, p-vinylbenzene sulfonic sodium salt, trimethoxysilylpropyl methacrylate, triethoxysilylpropyl methacrylate, tributoxysilylpropyl methacrylate, dimethoxymethylsilylpropyl methacrylate, diethoxymethylsilylpropyl methacrylate, dibutoxymethylsilylpropyl methacrylate, diisopropoxymethylsilylpropyl methacrylate, dimethoxysilylpropyl methacrylate, diethoxysilylpropyl methacrylate, dibutoxysilylpropyl methacrylate, diisopropoxysilylpropyl methacrylate, trimethoxysilylpropyl acrylate, triethoxysilylpropyl acrylate, tributoxysilylpropylacrylate, dimethoxymethylsilylpropyl acrylate, diethoxymethylsilylpropyl acrylate, dibutoxymethylsilylpropyl acrylate, diisopropoxymethylsilylpropyl acrylate, dimethoxysilylpropyl acrylate, diethoxysilylpropyl acrylate, dibutoxysilylpropyl acrylate, diisopropoxysilylpropyl acrylate, vinyl pyridine, vinyl acetate, vinyl butyrate, vinyl benzoate, maleic anhydride, N-phenylmaleimide, N-butylmaleimide, N-vinylpyrrolidone, N-vinylcarbazole and combinations thereof. This list is not exhaustive.

The polymerisable monomer composition further comprises at least one crosslinking monomer having at least two ethylenically unsaturated groups. Each of the at least two ethylenically unsaturated groups of the crosslinking monomer are of course to be capable of undergoing polymerisation. By having two polymerisable ethylenically unsaturated groups those skilled in the art will appreciate that the crosslinking monomer will provide for crosslinking points within the polymeric matrix molecular structure of the polymer beads.

In one embodiment, the crosslinking monomer has at least three ethylenically unsaturated groups. Each of these three ethylenically unsaturated groups is also to be polymerisable.

An important feature of the crosslinking monomers used in accordance with the invention is that the at least two ethylenically unsaturated groups are separated by at least 4 consecutive acyclic atoms. Where the crosslinking monomer has at least three ethylenically unsaturated groups, each of the at least three ethylenically unsaturated groups are separated at least by 4 consecutive acyclic atoms.

By the ethylenically unsaturated groups being separated by at least "4 consecutive acyclic atoms" is meant that in the atom connectivity between the ethylenically unsaturated groups there must be at least 4 acyclic atoms sequentially connected in series. By an "acyclic atom" is meant an atom that does not form part of a ring structure. There is no particular limitation regarding the nature of the acyclic atoms. For example, the consecutive acyclic atoms may include a carbon atom, a nitrogen atom, an oxygen atom, or a combination thereof.

In one embodiment, the at least two ethylenically unsaturated groups are separated by at least 5, or at least 6, or at least 7 acyclic atoms.

Where the crosslinking monomer comprises at least 3 ethylenically unsaturated groups, the at least three ethylenically unsaturated groups are each separated by at least 4, or at least 5, or at least 6, or at least 7 acyclic atoms.

In a further embodiment, the crosslinking monomer is an acyclic crosslinking monomer.

Examples of suitable crosslinking monomers having at least 2 ethylenically unsaturated groups include, but are not limited to, ethylene glycol dimethacrylate, poly(ethylene glycol) dimethacrylate, methylene bisacrylamide, triethylene glycol diacrylate and triethylene glycol dimethacrylate, ethylene glycol diacrylate and ethylene glycol dimethacrylate, diethylene glycol diacrylate and diethylene glycol dimethacrylate, glycerol diacrylate and glycerol dimethacrylate, 1,3-butanediol diacrylate and 1,3-butanediol dimethacrylate, 1,3-propanediol diacrylate and 1,3-propanediol dimethacrylate, 1,3-pentanediol diacrylate and 1,3-pentanediol dimethacrylate, 1,4-butanediol diacrylate and 1,4-butanediol dimethacrylate, hexamethylene glycol diacrylate and hexamethylene glycol dimethacrylate, decamethylene glycol diacrylate and decamethylene glycol dimethacrylate, 2,2-dimethylolpropane diacrylate and 2,2-dimethylolpropane dimethacrylate, tripropylene glycol diacrylate and tripropylene glycol dimethacrylate, 2,2-di(p-hydroxyphenyl)propane diacrylate and 2,2-di(p-hydroxyphenyl)propane dimethacrylate, 2,2,4-trimethyl-1,3-pentanediol diacrylate and 2,2,4-trimethyl-1,3-pentanediol dimethacrylate, tetraethylene glycol diacrylate, tetraethylene glycol dimethacrylate, and combinations thereof.

Suitable crosslinking monomers having at least three ethylenically unsaturated groups include, but are not limited to, trimethylolpropane triacrylate, trimethylolpropane trimethacrylate, pentaerythritol triacrylate, pentaerythritol trimethacrylate, glycerol triacrylate, glycerol trimethacrylate, pentaerythritol tetraacrylate, pentaerythritol tetramethacrylate, tris(2-hydroxy ethyl) isocyanurate triacrylate, ethoxylated trimethylolpropane triacrylate, ethoxylated trimethylolpropane trimethacrylate, propoxylated trimethylolpropane triacrylate, propoxylated trimethylolpropane trimethacrylate, ethoxylated glycerol triacrylate, ethoxylated glycerol trimethacrylate, propoxylated glycerol triacrylate, propoxylated glycerol trimethacrylate, ethoxylated pentaerythritol triacrylate, ethoxylated pentaerythritol trimethacrylate, propoxylated pentaerythritol triacrylate, propoxylated pentaerythritol trimethacrylate, ethoxylated pentaerythritol tetraacrylate, ethoxylated pentaerythritol tetramethacrylate, propoxylated pentaerythritol tetraacrylate, propoxylated pentaerythritol tetramethacrylate, and combinations thereof.

Suitable crosslinking monomers having at least three ethylenically unsaturated groups also include, but are not limited to, ethoxylated (3, 6, 9, 12, 15, 18, or 20) trimethylolpropane triacrylate, ethoxylated (3, 6, 9, 12, 15, 18, or 20) trimethylolpropane trimethacrylate, propoxylated (3, 6, 9, 12, 15, 18, or 20) trimethylolpropane triacrylate, propoxylated (3, 6, 9, 12, 15, 18, or 20) trimethylolpropane trimethacrylate, ethoxylated (3, 6, 9, 12, 15, 18, or 20) glycerol triacrylate, ethoxylated (3, 6, 9, 12, 15, 18, or 20) glycerol trimethacrylate, propoxylated (3, 6, 9, 12, 15, 18, or 20) glycerol triacrylate, propoxylated (3, 6, 9, 12, 15, 18, or 20) glycerol trimethacrylate, ethoxylated (3, 6, 9, 12, 15, 18, or 20) pentaerythritol triacrylate, ethoxylated (3, 6, 9, 12, 15, 18, or 20) pentaerythritol trimethacrylate, propoxylated (3, 6, 9, 12, 15, 18, or 20) pentaerythritol triacrylate, propoxylated (3, 6, 9, 12, 15, 18, or 20) pentaerythritol trimethacrylate, ethoxylated (4, 5, 8, or 16) pentaerythritol tetraacrylate, ethoxylated (4, 5, 8, or 16) pentaerythritol tetramethacrylate, propoxylated (4, 5, 8, or 16) pentaerythritol tetraacrylate, propoxylated (4, 5, 8, or 16) pentaerythritol tetramethacrylate, and combinations thereof.

Those skilled in the art will appreciate the number(s) in parenthesis after the alkoxylated moiety above refers to the number of repeat alkoxy groups.

By way of further explanation of the type of crosslinking monomers suitable for use in accordance with the invention, it will be convenient to compare the crosslinking monomers trimethylolpropane triacrylate and divinylbenzene. Thus, trimethylolpropane triacrylate has three ethylenically unsaturated groups that are each separated by 7 acyclic atoms. In contrast, divinylbenzene is a crosslinking monomer having two ethylenically unsaturated groups separated only by cyclic atoms. Accordingly, a crosslinking monomer such as divinylbenzene falls outside the scope of crosslinking monomers suitable for use in accordance with the invention.

According to the invention, the polymerisable monomer composition used in accordance with the process of the invention does not comprise divinylbenzene. Correspondingly, the polymeric matrix of the polymer beads according to the invention does not comprise or incorporate polymerised monomer residues of divinylbenzene.

In addition to the polymerisable monomer composition, the dispersed phase also comprises solid particulate material. Where the dispersed phase is described as a dispersed organic phase, it will be appreciated that organic phase will also comprise or have dispersed therethrough the solid particulate material.

In one embodiment, the solid particulate material is of a type that results in the polymer beads having a higher density than they otherwise would have in the absence of the solid particulate material. By providing the polymer beads with an increased density, their settling time can advantageously be decreased which allows for simpler separation of the polymer beads from a water sample being treated. In that case, the solid particulate material may be described as a weighting agent and assisting promoting rapid settling of the polymer beads.

According to such an embodiment, the solid particulate material used will generally be a material that has a higher density than the density of the polymer beads in the absence of the solid particulate material. The solid particulate material will typically be insoluble in any of the liquids used in preparing the polymer beads, and typically also insoluble in any liquid that the resulting polymer beads may contact.

Examples of suitable solid particulate material include, but are not limited to, titania, zirconia, barite, cassiterite, silica, aluminosilicates, nickel oxide, copper oxide, zinc oxide, zinc sulphide, and other oxides, sulphides, sulphates, carbonates of heavy metals. In one embodiment, the solid particulate material is a magnetic material.

As used herein, the term "magnetic" is intended to denote a property of a substance that enables it to be temporarily or permanently magnetised, and therefore includes the property of being paramagnetic. Accordingly, reference to a "magnetic particle" or a "magnetic solid particulate material" implies that this substance is at least capable of being magnetised, if not already in a magnetised state.

Incorporation of solid magnetic particulate material into the polymer beads can advantageously enable them to be used in applications involving continuous flows of water to be treated. In the absence of any applied sheer, attraction between the magnetic particles in the polymer beads causes them to flocculate and settle rapidly, enabling the beads to be readily separated under more demanding process conditions.

To render the polymer beads magnetic, the dispersed phase may include any solid particulate material that is magnetic. Examples of such material include, but are not limited to, γ-iron oxide (γ-Fe₂O₃, also known as maghemite), magnetite (Fe₃O₄), chromium dioxide, other metal oxides and more exotic magnetic materials, such as those based on neodymium or samarium and other rare earth materials, for example samarium-cobalt or neodymium iron boride. Maghemite is preferred because it is inexpensive. The magnetic particles may be included in the dispersed phase in a form that may or may not be magnetised.

Suitable paramagnetic materials include, but are not limited to, iron bearing minerals such as montmorillonite, nontronite, biotite, siderite and pyrite, aluminium and copper.

The particle size of the solid particulate material may range in size that is up to about one-tenth of the particle size of the polymer beads formed during the process. Solid particles that are larger than this may be difficult to evenly disperse throughout the polymer beads. More preferably, the solid particles range in size from sub-micron (e.g.0.1µm) to about 50µm, for example from about 0.05µm to about 10µm, or from about 0.05µm to 5µm, or from about 0.05µm to 1µm.

It may also be necessary to employ a dispersing agent for dispersing the solid particulate material in the dispersed phase. The dispersing agent acts to disperse the particles in the droplets of the dispersed phase to thereby form a stable dispersion (or suspension) of the particles in the dispersed phase. The dispersing agent also acts to promote a substantially even distribution of particles throughout the so formed polymeric matrix of the polymer beads. By distributing the particles in this manner, the problem of erosion of the particles from the polymer beads in service, as may happen if the particles were located only on the outer surface of the beads is avoided, or at least alleviated.

According to the invention the dispersed phase therefore further comprises a dispersing agent for dispersing the solid particulate material throughout the dispersed phase. Correspondingly, the polymeric matrix of the polymer beads has distributed therethrough dispersing agent.

Suitable dispersing agents for dispersing the solid particulate material will generally have a good binding affinity toward the surface of the particles and preferably should be able to chemically or physically bond to the surface of the particles. The dispersing agent will also generally be compatible with or soluble in the polymerisable monomer composition and the so formed polymeric matrix.

In one embodiment, the dispersing agent reacts with monomer of the polymerisable monomer composition to become covalently bound so the so formed polymeric matrix. Correspondingly, in a further embodiment the polymeric matrix of the polymer beads has dispersing agent covalently bound thereto. In that case, the dispersing agent will not be merely distributed throughout the polymeric matrix but rather will form part of the polymeric matrix.

Use of a dispersing agent that forms a covalent bond with the polymeric matrix not only results in a substantially even distribution of particles throughout the polymer bead, but the particles also advantageously become more effectively bound within the bead through the dispersing agent being covalently bound to the polymer matrix. In that case, the problem of leaching of the particles from the polymer beads can be avoided, or at least alleviated.

Selection of the dispersing agent will typically depend upon the particular particulate material and polymerisable monomer composition being used. Those skilled in the art should be able to readily select a suitable dispersing agent having regard to the specific reagents used in preparing the beads.

Examples of suitable dispersing agents for dispersing the solid particulate material in the dispersed phase include, but are not limited to, an amine block co-polymer such as that sold under the tradename Disperbyk^{®} 162, Disperbyk163, Disperbyk 164, Disperbyk 166 and Disperbyk 167 by Byk Chemie. Other types of dispersing agents found to be suitable include polyether phosphates, and modified polyurethanes. Other suitable dispersants include Solsperse 20000, Solsperse 24000, Solsperse 32000, Solsperse 38500, Solsperse 46000, Solsperse 82500, and Solsperse 55000 from Lubirzol. Teric^{®}305 and Alkanate^{®}40PF sold by Huntsman, Crafol^{®} AP12, AP60 and AP69 sold by Cognis, EFKA PU 4063 sold by BASF, Disparlin DA-375 sold by Kusumoto Chemicals, Disponil^{®} AEP8100 and AEP5300 sold by Henkel, and Rhodafac^{®} and PE501^{®} sold by Rhodia.

The solid particulate material will generally be added in an amount of from 10 to 300 wt%, based on the weight of the polymerisable monomer composition, for example from 20 to 100 wt% (same basis). When present, the dispersing agent used to disperse the solid particulate material in the dispersed phase will generally be added in an amount of from 0.1 to 30 wt%, for example in an amount of from 1 to 10 wt%, based on the weight of solid particulate material.

The dispersed phase further comprises a non-polymeric porogen and no polymeric porogen.

Porogens are used in the art to impart internal and surface macroporosity. Promoting such porosity of polymer beads increases the total surface area of the beads, which in turn can improve the efficiency of the beads in removing certain contaminants from water.

Porogens may conveniently be classified as being non-polymeric or polymeric. Polymeric porogens are typically made by a polymerisation process and have a molecular structure based on polymerised residues of monomer. Non-polymeric porogens typically have a lower molecular weight than polymeric porogens, are not made by a polymerisation process and do not have a molecular structure based on polymerised residues of monomer.

A porogen functions by providing discrete regions within the polymerisable monomer composition that do not participate in the polymerisation reaction. Once polymerisation takes place and the polymeric matrix is formed, the porogen can be partially or fully be removed thereby leaving pores or voids in the structure of the beads.

While non-polymeric porogens can typically be flushed entirely out of the polymer bead structure, for example by a cleaning step, due at least to their high molecular weight some polymeric porogen can be permanently trapped in the so formed polymer beads.

Polymer beads for removing contaminates from water have been prepared using non-polymeric porogens, polymeric porogens and combinations thereof.

For example, WO 1996/007675 discloses polymer beads prepared using non-polymeric porogen in combination with divinyl benzene as a crosslinking monomer.

WO 2014/032092 discloses polymer beads prepared using polymeric porogen and crosslinking monomers similar to those described herein. Use of the crosslinking monomers in combination with the polymeric porogen is said to provide for polymer beads with entrapped polymeric porogen having a unique pitted surface that exhibit improved properties for removing contaminates from water relative to those disclosed in WO 1996/007675.

Surprisingly, polymer beads prepared in accordance with the present invention can exhibit improved mechanical properties such as improved wear resistance and/or an improved ability for removing contaminates from water relative to polymer beads disclosed in WO 96/07675 or WO 2014/032092. Without wishing to be limited by theory it is believed using the specified crosslinking monomer in combination with a non-polymeric porogen and no polymeric porogen affords a particular morphology to the polymeric matrix of the polymer beads that surprisingly enhances wear resistance and/or contaminate, such as DOC, removal from water. Further discussion on those points is provided in the Example section below.

Examples of non-polymeric porogens that may be used in accordance with the invention include aromatic compounds such as toluene and benzene, alcohols such as butanol, iso-octanol, cyclohexanol, dodecanol, isoamyl alcohol, tertiary amyl alcohol and methyl iso-butyl carbinol, esters such as ethyl acetate and butyl acetate, saturated hydrocarbons such as n-heptane, iso-octane, halogenated solvents such as dichloroethane and trichloroethylene, and plasticisers such as dioctylphthalate and dibutyl adipate, and combinations thereof.

Examples of polymeric porogens that are not used in accordance with the invention include, but are not limited to, poly(vinyl methyl ether), poly(ethylene oxide), poly(vinyl acetate), poly( methyl methacrylates), poly(vinyl acetate co-maleic or fumric acid and esters), fatty alcohol ethoxylates, fatty alcohol alkoxylates, alcohol alkoxylates, fatty acid athoxylates, castor oil ethoxylates, fatty amine ethoxylates, alkylphenol ethoxylates, alkyl ethoxy carboxylic acids, and combinations thereof.

The non-polymeric porogen will generally be used in an amount ranging from about 10 wt% to about 60 wt%, or in an amount ranging from about 15 wt% to about 60 wt%, or in an amount ranging from about 20 wt% to about 50 wt%, relative to the total amount of non-polymeric porogen and monomer used.

In accordance with the invention the non-polymeric porogen is not used in conjunction with any polymeric porogen.

The components in the dispersed phase typically form an intimate mixture. In other words, at least the polymerisable monomer composition, the solid particulate material and the non-polymeric porogen are well mixed.

After providing the dispersion, the process of the invention involves polymerising the polymerisable monomer composition to form the polymer beads. The polymerisation may require the presence of a radical initiator to initiate reaction of the monomers. In that case, a free radical initiator can also be included in the dispersed phase. Those skilled in the art will appreciate that the initiator to be used will depend upon the nature of the polymerisable monomers present. By way of example only, suitable initiators include azoisobutyronitrile, benzoyl peroxide, lauroyl peroxide and t-butyl hydroperoxide.

The amount of initiator used is generally in the range of 0.01 to 5 wt %, more preferably 0.10 to 1%, calculated on the total weight of polymerisable monomers present.

The process of the invention may be performed using conventional suspension polymerisation techniques. In that case, the dispersion of the dispersed phase (which includes the monomers to be polymerised) in the continuous phase is typically achieved by mixing, for example, the organic and aqueous phases and shearing the resulting mixture. The shear applied to the dispersion can be adjusted to control the size of the droplets of the dispersed phase. As the droplets of the dispersed phase are polymerised to produce the polymer beads, the shear applied to the dispersion largely controls the particle size of the polymer beads.

Generally, the polymer beads are controlled to have a particle size within the range of about 10 to about 500 micron, or for example within the range of about 30 to about 1,000 micron, or within the range of about 100 to about 300 micron,.

Once a stable dispersion of the dispersed phase in the continuous phase is established, the polymerisation reaction may be initiated by heating the dispersion to a desired reaction temperature. The dispersion may be held at the desired reaction temperature until the polymerisation reaction is substantially complete.

In conducting the polymerisation reaction, the monomers will typically be selected to provide polymer beads that are suited to a desired application. For example, depending upon the monomers used, the resulting polymer beads may include acid or amine groups that can enable the polymer beads to function as an ion exchange resin, with these functional groups being directly provided by the polymerised residues of one or more functional monomers.

Functional monomers capable of directly introducing amine functionality to the beads include, but are not limited to, dimethylaminoethyl methacrylate, aminopropyl acrylamide and methacrylamide, N,N-dimethylaminopropyl acrylamide and methacrylamide, vinyl pyridine, and organic-soluble diallylamine or vinylimidazole salts.

Functional monomers capable of directly introducing acid functionality to the beads include, but are not limited to, acrylic acid, methacrylic acid and ethacrylic acid.

Alternatively, once the polymerisation is complete, the resulting polymer beads may require subsequent treatment to provide functional groups that will enable the polymer beads to function as an ion exchange resin. The particular treatment process used will be dependent on the composition of the polymer beads to be treated. The treatment process may involve reacting the polymer beads with one or more compounds that convert functional groups present on the beads into ion exchange groups, or reacting functional groups on the beads with one or more compounds that introduce ion exchange groups to the beads.

In a treatment process where functional groups on the beads are converted into ion exchange groups, the functional groups may be converted into amine or acid groups, or salts thereof, or quaternary ammonium groups. Various combinations of suitable functional groups and reactants may be employed for this purpose, the nature of which would be known to those skilled in the art. In that case, it is preferable that the functional groups on the beads are amide or ester groups, and that the amide or ester groups are introduced to the polymer beads by way of an amide or ester functional monomer.

Exemplary amide functional monomers include, but are not limited to, N-vinyl formamide or N-methyl-N-vinyl acetamide. Amide groups can be readily converted to amine groups by hydrolysis, Hofmann degradation or borohydride reduction. Hydrolysis is a preferred technique. For example, amide groups in N-vinylformamide or N-methyl-N-vinylacetamide monomer units can be converted to amine groups by hydrolysis. Amine groups can be readily converted into a salt or quaternary ammonium group.

Exemplary ester functional monomers include, but are not limited to, methyl-, ethyl-, or butyl acrylate. Ester groups can be readily converted to weak acid groups by hydrolysis. For example, ester groups in methyl-, ethyl-, or butyl acrylate monomer units can be converted to weak acid groups by hydrolysis.

The process where functional groups on the beads are reacted with one or more compounds which contain functional groups that introduce ion exchange groups to the beads, the one or more compounds preferably introduce amine or quaternary ammonium groups. Various combinations of suitable functional groups and reacting compounds may be employed for this purpose, the nature of which would be known to those skilled in the art.

According to the invention, the polymerisable monomer composition comprises glycidyl methacrylate as functional monomer.

The functional groups of the glycidyl methacrylate are reacted with compounds that introduce amine or quaternary ammonium groups. Suitable reactant compounds include, but are not limited to, amines, diamines, and polyamine compounds and their respective salts.

Preferred compounds for introducing amine or quaternary ammonium groups include, but are not limited to, piperidine, N, N-diethylethylene diamine, dimethylamine, diethylamine, trimethylamine, triethylamine, 3-dimethylaminopropylamine, ethylenediamine, diethylenetriamine, polyethyleneimine and their respective salts.

After polymerisation is complete non-polymeric porogen may remain within voids/pores of the polymeric matrix of the polymer beads. To facilitate removal of non-polymeric porogen residues and other reaction residues from the polymer beads it may be desired to subject the beads to a cleaning process. This may be achieved by a sequence of washing steps and/or by steam stripping the beads.

One method for cleaning the polymer beads includes the following steps:
(a) add polymer beads to a large excess of water, stir and allow to settle before separating beads from the supernatant;
(b) repeat step (a) several times;
(c) optionally disperse water washed beads in alcohol (e.g. ethanol);
(d) separate beads from alcohol and dry.

Alternatively, the polymer beads may be first subjected to steam stripping and then washed as outlined above.

Accordingly, in one aspect the present invention provides polymer beads comprising a porous polymeric matrix having distributed therethrough solid particulate material, the polymeric matrix (i) comprising polymerised monomer residues of (a) at least one mono-ethylenically unsaturated monomer, and (b) at least one crosslinking monomer having at least two ethylenically unsaturated groups separated by at least 4 consecutive acyclic atoms, wherein the polymeric matrix comprises non-polymeric porogen and no polymeric porogen.

After subjecting the so formed polymer beads to a cleaning step(s) any non-polymeric porogen remaining can be removed.

In that case, the present invention further provides polymer beads comprising a porous polymeric matrix having distributed therethrough solid particulate material, the polymeric matrix (i) comprising polymerised monomer residues of (a) at least one mono-ethylenically unsaturated monomer, and (b) at least one crosslinking monomer having at least two ethylenically unsaturated groups separated by at least 4 consecutive acyclic atoms, wherein the polymeric matrix comprises no porogen.

For avoidance of any doubt, by the polymer matrix comprising the "polymerised monomer residues" is meant that the specified monomers have been polymerised to form the polymer matrix and therefore the polymerised monomer residues make up at least a part of the molecular structure of that polymeric matrix. In other words, the polymeric matrix (i) presents as at least part of its molecular structure polymerised monomer residues of (a) at least one mono-ethylenically unsaturated monomer, and (b) at least one crosslinking monomer having at least two ethylenically unsaturated groups separated by at least 4 consecutive acyclic atoms.

Polymer beads according to the invention are therefore formed of a porous polymeric matrix, the polymeric matrix itself (i) presenting as part of its molecular structure polymerised monomer residues of (a) at least one mono-ethylenically unsaturated monomer, and (b) at least one crosslinking monomer having at least two ethylenically unsaturated groups separated by at least 4 consecutive acyclic atoms, and (ii) having distributed therethrough solid particulate material.

According to the invention, the polymer beads have ion exchange capacity.

The present invention also provides a method of treating an aqueous solution (e.g. water), the method comprising contacting said aqueous solution with polymer beads of, or prepared in accordance with, the present invention. Treatment of the aqueous solution may involve removing contaminants such as DOC. In that case, DOC becomes adsorbed to a surface of the polymer beads and removal of the polymer beads from the aqueous solution also results in DOC being removed from the aqueous solution.

The present invention further provides a method of separating ions from an aqueous solution, said method comprising contacting the solution with polymer beads having ion exchange capacity of, or prepared in accordance with, the present invention. In that case, ions become adsorbed to a surface of the polymer beads and removal of the polymer beads from the aqueous solution also results in ions being separated from the aqueous solution.

The polymer beads, together with the adsorbed contaminants/ions can readily be separated from the aqueous solution thereby leaving purified aqueous solution. As the polymer beads contain solid particulate material, their separation from the aqueous solution can be facilitated by, for example, the beads having an increased density that allows for more rapid settling. Alternatively, the polymer beads may contain magnetic solid particulate material and they can be separated from solution using the beads' magnetic properties. For example, in the absence of sheer, the beads can aggregate through magnetic attraction and settle out of the purified solution. Alternatively, they can be separated on a wet high intensity magnetic separator or magnetic drum separator or similar device.

Examples of anions that may be separated from the aqueous solution include, but are not limited to, dissolved organics such as humates and fulvates, chromate, arsenate, arsenita, selenate, selenite, phosphate, perchlorate, nitrate and dissolved organic nitrogen.

Examples of cations that may be separated from the aqueous solution, include, but are not limited to, transition metal ions such as cadmium and zinc, and also metal ions such as calcium and magnesium.

The polymer beads in accordance with the invention are particularly suitable for use in removing undesirable contaminants from an aqueous solution.

The invention therefore also provides a method of removing DOC from an aqueous solution, the method comprising (i) contacting said aqueous solution with polymer beads of, or prepared in accordance with, the present invention, and (ii) removing polymer beads with DOC adsorbed thereon from the aqueous solution to thereby remove DOC from the aqueous solution.

The invention therefore also provides a method of removing ions from an aqueous solution, said method comprising (i) contacting said aqueous solution with ion exchange polymer beads of, or prepared in accordance with, the present invention, and (ii) removing from the solution polymer beads that have undergone ion exchange with the ions to be removed.

Polymer beads in accordance with the invention can advantageously provide for an increase of charge density in the order of 10-20%, relative to conventional polymer beads such as those prepared in accordance with WO 96/07675 or WO 2014/032092.

Polymer beads in accordance with the invention advantageously exhibit excellent wear resistance thereby minimising their attrition during application, for example in removing undesirable contaminants from an aqueous solution.

The term "alkyl" includes saturated aliphatic groups, including straight-chain alkyl groups (e.g., methyl, ethyl, propyl, butyl, pentyl, hexyl, heptyl, octyl, nonyl, decyl, etc.) and branched-chain alkyl groups (isopropyl, tert-butyl, isobutyl, etc.). In some embodiments "alkyl" refers to straight chained alkyl. The expression "C_{x-y}alkyl", wherein x is 1-5 and y is 2-12 indicates an alkyl group (straight- or branched-chain) containing the specified number of carbon atoms. For example, the expression C₁₋₂alkyl includes, but is not limited to, methyl, ethyl, propyl, butyl, isopropyl, tert-butyl and isobutyl. The term "alkylene" refers to a divalent alkyl group.

In one embodiment, a straight chain or branched chain alkyl has 12 or fewer carbon atoms (i.e. C₁₋₁₂). In some embodiments a straight chain or branched chain alkyl has 8 or fewer carbon atoms (i.e. C₁₋₈).

The term "alkenyl" includes unsaturated aliphatic groups analogous in length and possible substitution to the alkyls described above, but which contain at least one double bond.

For example, the term "alkenyl" includes straight-chain alkenyl groups (e.g., ethenyl, propenyl, butenyl, pentenyl, hexenyl, heptenyl, octenyl, nonenyl, decenyl, etc.) and branched-chain alkenyl groups. In some embodiments "alkenyl" refers to straight chained alkenyl. In certain embodiments, a straight chain or branched chain alkenyl group has 12 or fewer carbon atoms in its backbone (e.g., C₂-C₁₂ for straight chain, C₃-C₁₂ for branched chain). The term C₂-C₁₂ includes alkenyl groups containing 2 to 12 carbon atoms. The term "alkenylene" refers to a divalent alkenyl group.

The term "alkynyl" includes unsaturated aliphatic groups analogous in length and possible substitution to the alkyls described above, but which contain at least one triple bond. For example, the term "alkynyl" includes straight-chain alkynyl groups (e.g., ethynyl, propynyl, butynyl, pentynyl, hexynyl, heptynyl, octynyl, nonynyl, decynyl, etc.) and branched-chain alkynyl groups. In some embodiments "alkynyl" refers to straight chained alkynyl. In certain embodiments, a straight chain or branched chain alkynyl group has 12 or fewer carbon atoms in its backbone (e.g., C₂-C₁₂ for straight chain, C₂-C₁₂ for branched chain). The term C₂-C₁₂ includes alkynyl groups containing 2 to 12 carbon atoms. The term "alkynylene" refers to a divalent alkynyl group.

The term "carbocyclyl" includes any of non-aromatic monocyclic, polycyclic, fused or conjugated hydrocarbon residues, preferably C₃₋₂₀ (e.g. C₃₋₁₀ or C₃₋₈). The rings may be saturated, e.g. cycloalkyl, or may possess one or more double bonds (cycloalkenyl) and/or one or more triple bonds (cycloalkynyl). Particularly preferred carbocyclyl moieties are
5-, 6-membered or 9-10 membered ring systems. Suitable examples include cyclopropyl, cyclobutyl, cyclopentyl, cyclohexyl, cycloheptyl, cyclooctyl, cyclononyl, cyclodecyl, cyclopentenyl, cyclohexenyl, cyclooctenyl, cyclopentadienyl, cyclohexadienyl, cyclooctatetraenyl, indanyl, decalinyl and indenyl. A carbocyclyl group may be optionally substituted by one or more optional substituents as herein defined. The term "carbocyclylene" is intended to denote the divalent form of carbocyclyl. The term "cycloalkyl" includes saturated cyclic aliphatic groups (cyclopropyl, cyclopentyl, cyclohexyl, cycloheptyl, cyclooctyl). The term C₃₋₆cycloalkyl includes, but is not limited to, cyclopropyl, cyclopentyl, and cyclohexyl. Likewise, preferred cycloalkyls have from 4-7 carbon atoms in their ring structure, and more preferably have 5 or 6 carbons in the ring structure. As used herein the term "heterocycloalkyl" refers to a cycloalkyl group containing one or more endocyclic heteroatoms. Likewise, cycloalkenyl groups may have from 3-8 carbon atoms in their ring structure, and more preferably have 5 or 6 carbons in the ring structure.

The term "heteroatom" includes atoms of any element other than carbon or hydrogen. Preferred heteroatoms are nitrogen, oxygen, sulfur and phosphorus. Particularly preferred heteroatoms are nitrogen and oxygen.

The term "amine" or "amino" should be understood as being broadly applied to both a molecule, or a moiety or functional group, as generally understood in the art, and may be primary, secondary, or tertiary. The term "amine" or "amino" includes compounds where a nitrogen atom is covalently bonded to at least one carbon or hydrogen.

As used herein, the term "optionally substituted" typically refers to where a hydrogen atom on a group has been substituted with a non-hydrogen group. Unless the context requires otherwise, such as where the optional substituent has been explicitly referred to, examples of optional substituents are detailed below. Any optionally substituted group may bear one, two, three or more optional substituents.

In some embodiments the optional substituents are selected from: optionally substituted C₁₋₆alkyl; optionally substituted C₆₋₁₀aryl; optionally substituted C₂₋₈heterocyclyl; halogen; -OH; -NH₂; -NO₂; -SO₂NH₂; -COOH; -COO(C₁₋₆alkyl); -NHCOO(C₁₋₆alkyl); -NH-COR^{a} wherein R^{a} is H or C₁₋₆alkyl; -NR^{a}R^{b} wherein R^{a} is H or C₁₋₆alkyl and R^{b} is H or C₁₋₆alkyl; -C(O)NR^{a}R^{b}, wherein R^{a} is H or C₁₋₆alkyl and R^{b} is H, C₁₋₆alkyl; -C(O)R^{a} wherein R^{a} is H or C₁₋₆alkyl; or -Y-Q wherein:
Y is selected from: -O-, -NH-, -N(C₁₋₆alkyl)-, -NHSO₂-, -SO₂NH-, -NHCONH-, -NHCON(C₁₋₆alkyl)-, -S(O)_{q}- wherein q is 0, 1 or 2, -C(O)NH-, -C(O)N(CH₃)-, -NHC(O)-, -C(O)-, -NHC(NH)NH-, or absent, and
Q is selected from: optionally substituted C₆₋₁₀aryl; optionally substituted 5-10 membered C₁₋₉heteroaryl; optionally substituted 3-10 membered C₁₋₉heterocyclyl; optionally substituted C₃₋₁₀cycloalkyl; optionally substituted C₁₋₆alkyl; optionally substituted C₁₋₆alkylacyl; optionally substituted C₂₋₆alkenyl; optionally substituted C₂₋₆alkynyl; and hydrogen.

In other embodiments the optional substituents are selected from: optionally substituted C₁₋₆alkyl; optionally substituted C₆₋₁₀aryl; halogen; -OH; -NH₂; -COOH; -COO(C₁₋₆alkyl); -NR^{a}R^{b} wherein R^{a} is H or C₁₋₆alkyl and R^{b} is H or C₁₋₆alkyl; -NH-COR^{a} wherein R^{a} is H or C₁₋₆alkyl; -C(O)NR^{a}R^{b}, wherein R^{a} is H or C₁₋₆alkyl, and R^{b} is H, C₁₋₆alkyl; C(O)R^{a} wherein R^{a} is H or C₁₋₆alkyl; or -Y-Q, wherein:
Y is selected from: -O-, -NH-, -N(C₁₋₆alkyl)-, -NHCONH-, -S-, -C(O)NH-, -C(O)N(CH₃)-, -NHC(O)-, -C(O)-, -NHC(NH)NH-, or absent, and
Q is selected from: C₆₋₁₀aryl optionally substituted with -OH; 5-10 membered C₁₋₉heteroaryl; 3-10 membered C₁₋₉heterocyclyl; C₃₋₁₀cycloalkyl; C₁₋₆alkyl; C₁₋₆alkylacyl; C₂₋₆alkenyl; C₂₋₆alkynyl; and hydrogen.

The term "amide," "amido" or "aminocarbonyl" includes compounds or moieties which contain a nitrogen atom which is bound to the carbon of a carbonyl or a thiocarbonyl group.

The term "aryl" refers to aromatic monocyclic (eg phenyl) or polycyclic groups (e.g., tricyclic, bicyclic, e.g., naphthalene, anthryl, phenanthryl). Aryl groups can also be fused or bridged with alicyclic or heterocyclic rings which are not aromatic so as to form a polycycle (e.g., tetralin, methylenedioxyphenyl).

The term "heteroaryl", as used herein, represents a monocyclic or bicyclic ring, typically of up to 7 atoms in each ring, wherein at least one ring is aromatic and contains from 1 to 4 heteroatoms selected from the group consisting of O, N and S. Heteroaryl groups within the scope of this definition include but are not limited to: benzimidazole (otherwise known as benzoimadazole), acridinyl, carbazolyl, cinnolinyl, quinoxalinyl, pyrrazolyl, indolyl, benzotriazolyl, furanyl, thienyl, benzothienyl, benzofuranyl, quinolinyl, isoquinolinyl, oxazolyl, isoxazolyl, indoiyl, pyrazinyl, pyridazinyl, pyridinyl, pyrimidinyl, pyrrolyl, tetrahydroquinoline. As with the definition of heterocycle below, "heteroaryl" is also understood to include the N-oxide derivative of any nitrogen-containing heteroaryl. In cases where the heteroaryl substituent is bicyclic and one ring is non-aromatic or contains no heteroatoms, it is understood that attachment is via the aromatic ring or via the heteroatom containing ring, respectively.

The term "heterocycle" or "heterocyclyl" as used herein is intended to mean a 5- to 10-membered aromatic or nonaromatic heterocycle containing from 1 to 4 heteroatoms selected from the group consisting of O, N and S, and includes bicyclic groups.

"Heterocyclyl" therefore includes the above mentioned heteroaryls, as well as dihydro and tetrathydro analogs thereof. Further examples of "heterocyclyl" include, but are not limited to the following: benzoimidazolyl, benzofuranyl, benzofurazanyl, benzopyrazolyl, benzotriazolyl, benzothiophenyl, benzoxazolyl, carbazolyl, carbolinyl, cinnolinyl, furanyl, imidazolyl, indolinyl, indoiyl, indolazinyl, indazolyl, isobenzofuranyl, isoindolyl, isoquinolyl, isothiazolyl, isoxazolyl, naphthpyridinyl, oxiranyl, oxadiazolyl, oxazolyl, oxazoline, isoxazoiine, oxetanyl, pyranyl, pyrazinyl, pyrazolyl, pyridazinyl, pyridopyridinyl, pyridazinyl, pyridyl, pyrimidyl, pyrrolyl, quinazolinyl, quinolyt, quinoxalinyl, tetrahydropyranyl, tetrazolyl, tetrazolopyridyl, thiadiazolyl, thiazolyl, thienyl, triazolyl, azetidinyl, 1,4-dioxanyl, hexahydroazepinyl, piperazinyl, piperidinyl, pyridin-2-onyl, pyrrolidinyl, moϕholinyl, thiomorpholinyl, dihydrobenzoimidazolyl, dihydrobenzofuranyl, dihydrobenzothiophenyl, dihydrobenzoxazolyl, dihydrofuranyl, dihydroimidazolyl, dihydroindolyl, dihydroisooxazolyl, dihydroisothiazolyl, dihydrooxadiazolyl, dihydrooxazolyl, dihydropyrazinyl, dihydropyrazolyl, dihydropyridinyl, dihydropyrimidinyl, dihydropyrrolyl, dihydroquinolinyl, dihydrotetrazolyl, dihydrothiadiazolyl, dihydrothiazolyl, dihydrothienyl, dihydrotriazolyl, dihydroazetidinyl, methylenedioxybenzoyl, tetrahydrofuranyl, and tetrahydrothienyl, and N-oxides thereof. Attachment of a heterocyclyl substituent can occur via a carbon atom or via a heteroatom. As referred to herein "heterocycloalkyl" refers to a saturated heterocyclyl group. In some embodiments the heterocycloalkyl group is optionally substituted with one or more OH and/or CH₂OH. An example of such a group is the simple sugar ribose. As referred to herein "alkylheterocyclyl" refers to an alkyl group being attached to a heterocyclyl group.

The term "acyl" includes compounds and moieties which contain the acyl radical (CH₃CO-) or a carbonyl group such as CH₃CH₂CH₂CO-.

The term "alkoxy" includes substituted and unsubstituted alkyl, alkenyl, and alkynyl groups covalently linked to an oxygen atom. Examples of alkoxy groups include methoxy, ethoxy, isopropyloxy (isopropoxy), propoxy, butoxy, and pentoxy groups and may include cyclic groups such as cyclopentoxy.

The term "carbonyl" or "carboxy" includes compounds and moieties which contain a carbon connected with a double bond to an oxygen atom, and tautomeric forms thereof. Examples of moieties that contain a carbonyl include aldehydes, ketones, carboxylic acids, amides, esters, anhydrides, etc. The term "carboxy moiety" or "carbonyl moiety" refers to groups such as "alkylcarbonyl" groups wherein an alkyl group is covalently bound to a carbonyl group, "alkenyl carbonyl" groups wherein an alkenyl group is covalently bound to a carbonyl group, "alkynylcarbonyl" groups wherein an alkynyl group is covalently bound to a carbonyl group, "arylcarbonyl" groups wherein an aryl group is covalently attached to the carbonyl group. Furthermore, the term also refers to groups wherein one or more heteroatoms are covalently bonded to the carbonyl moiety. For example, the term includes moieties such as, for example, aminocarbonyl moieties, (wherein a nitrogen atom is bound to the carbon of the carbonyl group, e.g., an amide), aminocarbonyloxy moieties, wherein an oxygen and a nitrogen atom are both bond to the carbon of the carbonyl group (e.g., also referred to as a "carbamate"). Furthermore, aminocarbonylamino groups (e.g., ureas) are also include as well as other combinations of carbonyl groups bound to heteroatoms (e.g., nitrogen, oxygen, sulfur, etc. as well as carbon atoms). Furthermore, the heteroatom can be further substituted with one or more alkyl, alkenyl, alkynyl, aryl, aralkyl, acyl, etc. moieties.

The term "thiocarbonyl" or "thiocarboxy" includes compounds and moieties which contain a carbon connected with a double bond to a sulfur atom. The term "thiocarbonyl moiety" includes moieties that are analogous to carbonyl moieties. For example, "thiocarbonyl" moieties include aminothiocarbonyl, wherein an amino group is bound to the carbon atom of the thiocarbonyl group, furthermore other thiocarbonyl moieties include, oxythiocarbonyls (oxygen bound to the carbon atom), aminothiocarbonylamino groups, etc.

The term "ester" includes compounds and moieties that contain a carbon or a heteroatom bound to an oxygen atom that is bonded to the carbon of a carbonyl group. The term "ester" includes alkoxycarboxy groups such as methoxycarbonyl, ethoxycarbonyl, propoxycarbonyl, butoxycarbonyl, pentoxycarbonyl, etc. The alkyl, alkenyl, or alkynyl groups are as defined above.

The term "hydroxy" or "hydroxyl" includes groups with an -OH.

The term "halogen" includes fluorine, chlorine, bromine and iodine. In some embodiments halogen refers to fluorine or chlorine.

The terms "polycyclyl" or "polycyclic" include moieties with two or more rings (e.g., cycloalkyls, cycloalkenyls, cycloalkynyls, aryls and/or heterocyclyls) in which two or more carbons are common to two adjoining rings, e.g., the rings are "fused rings". Rings that are joined through non-adjacent atoms are termed "bridged" rings.

It is to be understood that all of the compounds of the invention will further include bonds between adjacent atoms and/or hydrogens as required to satisfy the valence of each atom. That is, double bonds and/or hydrogen atoms are typically added to provide the following number of total bonds to each of the following types of atoms: carbon: four bonds; nitrogen: three bonds; oxygen: two bonds; and sulfur: two, four or six bonds. It is also to be understood that definitions given to the variables of the generic formulae described herein will result in molecular structures that are in agreement with standard organic chemistry definitions and knowledge, e.g., valency rules.

It will be noted that the structures of some of the compounds of this invention include asymmetric carbon atoms. It is to be understood accordingly that the isomers arising from such asymmetry (e.g., all enantiomers, stereoisomers, rotamers, tautomers, diastereomers, or racemates) are included within the scope of this invention. Such isomers can be obtained in substantially pure form by classical separation techniques and by stereochemically controlled synthesis. Furthermore, the structures and other compounds and moieties discussed in this application also include all tautomers thereof. Compounds described herein may be obtained through synthetic strategies known in the art.

The invention will be further described with reference to the following non-limiting examples.

### EXAMPLES

### Example 1 - (New Resin):

The polymer beads were prepared in accordance with the process of the present invention using the following raw materials:
1. Water: Continuous phase in which the organic phase is dispersed and then reacted.
2. Gosenhol^{®} GH20: a high molecular weight polymeric dispersant in the form of polyvinyl alcohol which disperses the organic phase in the water as droplets (i.e. it is not a polymeric porogen)..
3. Cyclohexanol: a porogen which is a solvent for monomer and non-solvent for the polymer, and it promotes the formation of voids and internal porosity in the resin beads.
4. Disperbyk 163: it is a high molecular weight wetting and dispersing agent, consisting of an amine block co-polymer (i.e. it is not a polymeric porogen).
5. γ-iron oxide, this is the magnetic oxide that makes the resin beads magnetic.
6. TMPTMA (TRIMETHYLOLPROPANE TRIMETHACRYLATE): this is the monomer that crosslinks the beads.
7. GMA (glycidyl methacrylate): this is the monomer that is first polymerised to incorporate it into the beads, then it is quarternised to place quaternary ammonium groups into the beads, thereby creating the ion exchange sites.
8. Vazo^{®}67: this is the catalyst that initiates polymerisation when the mixture is heated above 50°C.
9. Trimethylamine hydrochloride: this is the amine that reacts with the epoxy group of the glycidyl methacrylates to form quaternary ammonium ion exchange sites. The hydrochloride salt is so that the amine used is a more neutral pH.

Water (2333g) was charged to a 5 liter reactor and the stirrer and nitrogen purge started. Next, Gosenhol GH20 (5g) was added, and the water phase heated to 80°C. While the water was heating and were charged to a separate mix tank and the stirrer turned on. The Disperbyk 163 (33g) and the γ-iron oxide (240g) and the first portion of cyclohexanol (280 g) were added together, and dispersed for 20 minutes to thoroughly disperse the magnetic oxide. GMA(440g), TMPTMA (130g) and remaining cyclohexanol (120g) and the Vazo67 (1.85g) were then added and the mixture was stirred for a further five minutes before adding it to the heated water phase. The resulting dispersion was then stirred and held at 80°C for two hours. The nitrogen purge was stopped and a mixture of trimethylamine hydrochloride (450g 55% w/w) added, then the mixture was stirred and held at 80°C for a further three hours. The mixture was then cooled and the resulting polymer beads were cleaned with pure water or ethanol.

### Comparative Example 1 - ((PP) Resin):

These polymer beads were prepared differently than the process of the present invention using the following raw materials:
1. Water: Continuous phase in which the organic phase is dispersed and then reacted.
2. Gosenhol^{®} GH20: a high molecular weight polymeric surfactant, a polyvinyl alcohol which disperses the organic phase in the water as droplets.
3. Cyclohexanol: a porogen which is a solvent for monomer and non-solvent for the polymer, and it promotes the formation of voids and internal porosity in the resin beads.
4. Surfonic POA-17R2: a polymeric porogen that promotes formation of a pitted surface.
5. Disperbyk 163: it is a high molecular weight wetting and dispersing agent, consisting of an amine block co-polymer.
6. γ-iron oxide, this is the magnetic oxide that makes the resin beads magnetic.
7. TMPTMA (TRIMETHYLOLPROPANE TRIMETHACRYLATE): this is the monomer that crosslinks the beads.
8. GMA (glycidyl methacrylates): this is the monomer that is first polymerised to incorporate it into the beads, then it is quarternised to place quaternary ammonium groups into the beads, thereby creating the ion exchange sites.
9. Vazo^{®}67: this is the catalyst that initiates polymerisation when the mixture is heated above 50°C.
10. Trimethylamine hydrochloride: this is the amine that reacts with the epoxy group of the glycidyl methacrylates to form quaternary ammonium ion exchange sites. The hydrochloride salt is so that the amine used is a more neutral pH.

Water (2333g) was charged to a 5 liter reactor and the stirrer and nitrogen purge started. Next, Gosenhol GH20 (5g) was added, and the water phase heated to 80°C. While the water was heating and were charged to a separate mix tank and the stirrer turned on. The Disperbyk 163 (33g) and the γ-iron oxide (240g) and the first portion of cyclohexanol (280 g) were added together, and dispersed for 20 minutes to thoroughly disperse the magnetic oxide. GMA(440g), TMPTMA (130g) and Surfonic POA-17R2 (120g) and the Vazo67 (1.85g) were then added and the mixture was stirred for a further five minutes before adding it to the heated water phase. The resulting dispersion was then stirred and held at 80°C for two hours. The nitrogen purge was stopped and a mixture of trimethylamine hydrochloride (450g 55% w/w) added, then the mixture was stirred and held at 80°C for a further three hours. The mixture was then cooled and the resulting polymer beads were cleaned with pure water.

### Comparative Example 2 - (Old Resin):

Polymer beads were prepared in the manner of Example 1, except that DVB-55 (divinyl benzene) was used as the crosslinking agent and only cyclohexanol was used as the porogen.

### Example 2 - DOC contaminant removal from water samples

A jar test for removing DOC from various water samples (samples A, B and C from different regions of the United States) was conducted using polymer bead samples (resins) made in Example 1 and Comparative Examples 1 and 2.

The jar test was performed as follows: 2ml of resin was measured, and this was added to 1.2L of the water to be treated. The solution was stirred for 30 minutes using a Boltac jar tester. The resin was then separated from the water, and the water was measured at UV254 using a UV/Visible spectrometer. The change in absorbance was presented as a percentage DOC removal.

Results are shown in Table 1.

**Table 1.**

| **Source** | **Bead type** | **Parameter** | **200 BV** % **DOC Removal** |
|---|---|---|---|
| US water A | New Resin | DOC (mg/L) | 76.2 |
| | PP Resin | DOC (mg/L) | 71.9 |
| | Old Resin | DOC (mg/L) | 65.1 |

| **Source** | **Bead type** | **Parameter** | **200 BV % DOC Removal** |
|---|---|---|---|
| US water B | New Resin | DOC (mg/L) | 57.2 |
| | PP Resin | DOC (mg/L) | 55.6 |
| | Old Resin | DOC (mg/L) | 29.2 |
| **Source** | **Bead Type** | **Parameter** | **200 BV % DOC Removal** |
| | New Resin | DOC (mg/l) | 41.3 |
| US Water C | PP Resin | DOC (mg/l) | 39.6 |
| | Old Resin | DOC (mg/l) | 13.4 |

DOC removal rates for water source A using New Resin were up to 17% better than the Old Resin (for same BV) and 6% better than the PP Resin.

DOC removal rates for Water source B using New Resin were up to 96% better than Old Resin (for same BV), and 3% better than the PP Resin Example.

DOC removal rates at water source C using New Resin were over 200% better than comparative Old Resin (for same BV), and 4% better than the PP Resin Sample.

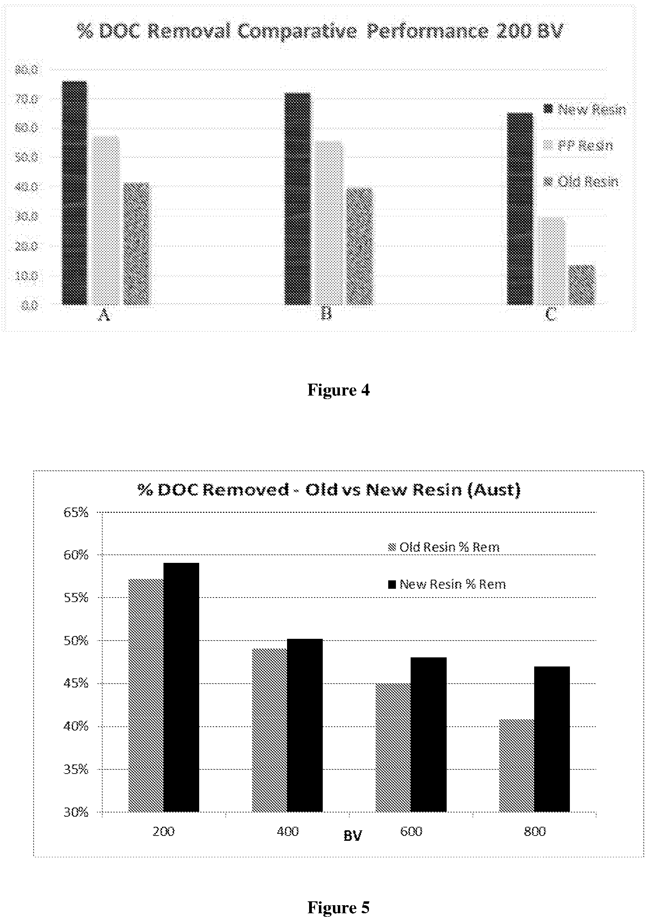

The results of Table 1 are graphically represented in Figure 4

### Example 3 - DOC contaminant removal from water sample

Ajar test (as outlined above) for removing DOC from a water sample (obtained from a region of northern New Zealand) was conducted using polymer bead samples (resins) made in Example 1 and Comparative Example 2.

Results are shown in Table 2.

**Table 2.**

| **Source** | **Bead type** | **Parameter** | **200 BV % DOC Removal** | **400 BV % DOC Removal** | **500 BV % DOC Removal** |
|---|---|---|---|---|---|
| NZ Water | New Resin | DOC (mg/L) | 72 | 62 | 56 |
| | Old Resin | DOC (mg/L) | 66 | 57 | 51 |

DOC removal rates for the NZ Water using New Resin were between 9-10% better than the Old Resin (for corresponding BV's).

### Example 4 - DOC removal comparison from Australian Water Sample

5 mls of the specified resin was added to 1 litre raw water samples and mixed at 180rpm for 15 minutes. This was repeated to achieve various BVTR and comparative DOC removal was measured using UV254 on 0.45um filtered supernatant samples and expressed as % removal, the results of which are shown in Table 3 below and graphically represented in Figure 5.

**Table 3.**

| **Source** | **Bead type** | **Parameter** | **200BV % DOC rem** | **400BV % DOC Rem** | **600BV % DOC Rem** | **800BV % DOC Rem** |
|---|---|---|---|---|---|---|
| **Aust Water** | Old resin | DOC | 57.2 | 49.1 | 44.9 | 40.8 |
| **Aust Water** | New Resin | DOC | 59.1 | 50.2 | 48 | 47 |

### Example 5 - Morphology and mechanical evaluation

### Scanning Electron Microscope (SEM)

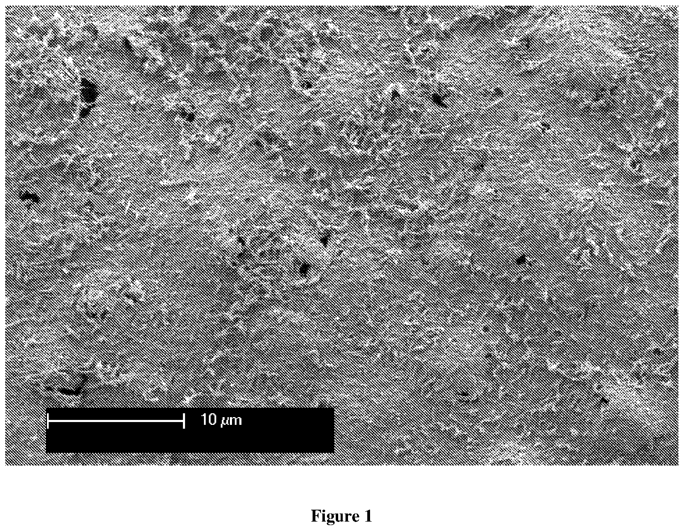

A SEM (Scanning Electron Microscope) photo of the resulting beads is shown in Figure 1. The SEM photo shows a moderately smooth surface with a few pores up to the size of 1 um.

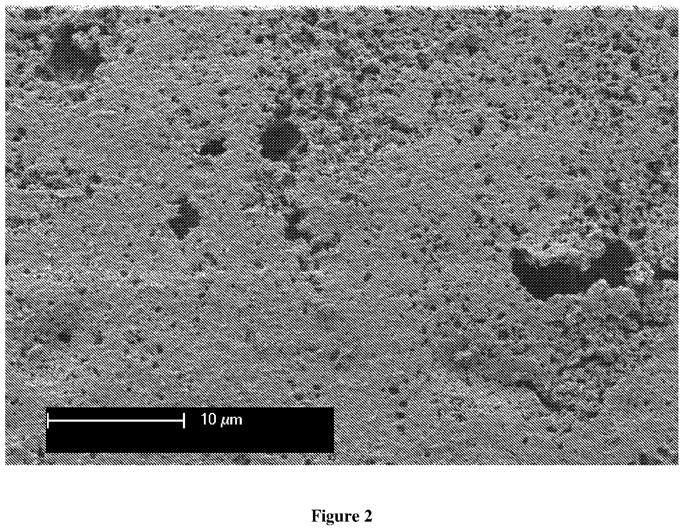

A SEM (Scanning Electron Microscope) photo of the resulting beads is shown in Figure 2. The SEM photo shows a highly pitted surface with large pores and fissures of size up to 10 um.

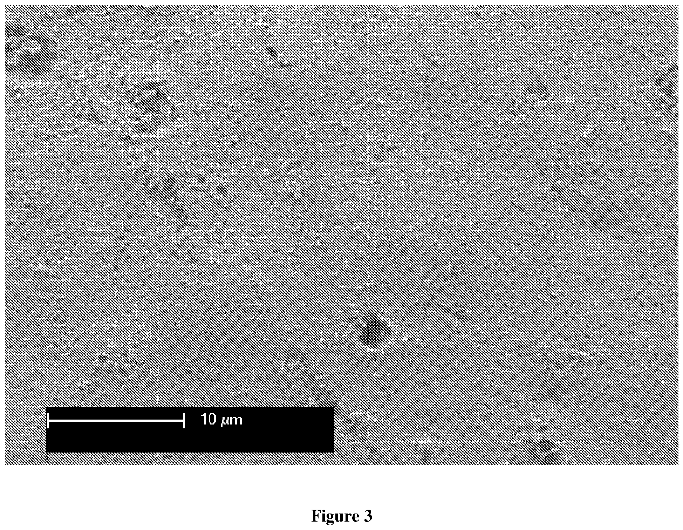

A SEM photo of the resulting beads is shown in Figure 3. The SEM photo shows a very smooth surface with pores up to 1um in diameter.

### Dynamic mechanical analysis (DMA)

DMA analysis was performed on a DMA Q800 (TA instrument, USA). The stress rate was set at 2 N.min⁻¹ and the temperature kept at 25°C. The dimension of the freeze-dried bead sample beds was set at 15 mm in diameter and 1.5 to 1.8 mm in thicknesses with a total sample weight of 100 ± 5 mg. The elastic modulus, E, was determined from the slope of the linear dependence at the initial deformation range.

Results are shown in Table 4.

**Table 4. Average Elastic moduli of the beads at 40kPa.**

| **Sample** | **Elastic modulus, *E*, (kPa)** |
|---|---|
| Old resin | 266 |
| New resin | 333 |
| PP resin | 228 |

The data from the DMA analysis demonstrates the New resin (according to the invention) is mechanically more stiff and resilient than the other two samples (comparative). Trails of the New resin support that data in that they have been found to be less prone to attrition during processing.

### Brunauer Emmett Teller (BET) surface area

The surface area of the resin beads was measured by BET using an Autosorb IQ instrument (Quantachrome, USA). Freeze dried Samples were degassed for 9 h at 100°C before analysis. The average values from two BET measurements are reported in Table 5.

**Table 5. BET surface area of the resin beads.**

| **Sample** | **BET surface area (m²/g)** | **Standard deviation** |
|---|---|---|
| Old resin | 19.067 | 1.173 |
| New resin | 25.496 | 2.051 |
| PP resin | 53.358 | 0.151 |

The BET data shows the three samples have different surface areas, which in turn is indicative of each sample having different and distinctive morphologies.

### Pore size distribution. Density Functional Theory (DFT) method

The pore size distributions of the Old resin and the New resin were calculated using the DFT method using an Autosorb IQ instrument (Quantachrome, USA). Results are summarised in Tables 6 and 7.

**Table 6. Old resin: DFT method summary.**

| | |
|---|---|
| Pore volume (cc/g) | 0.145 |
| Surface area (m²/g) | 18.591 |
| Lower confidence limit (Å) | 7.049 |
| Fitting error (%) | 1.294 |
| Half pore width (Mode) (Å) | 100.278 |

**Table 7. New resin: DFT method summary.**

| | |
|---|---|
| Pore volume (cc/g) | 0.066 |
| Surface area (m²/g) | 20.155 |
| Lower confidence limit (Å) | 7.049 |
| Fitting error (%) | 1.433 |
| Half pore width (Mode) (Å) | 13.845 |

The DFT data shows the two samples have different pore size distributions, which in turn is indicative of each sample having different and distinctive morphologies.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

## Claims

1. A process for producing polymer beads having ion exchange capacity and a porous polymeric matrix in which is distributed solid particulate material; the process comprising:
(i) providing a dispersion having a dispersed organic phase and a continuous aqueous phase, the dispersed organic phase comprising:
(a) polymerisable monomer composition,
(b) solid particulate material,
(c) non-polymeric porogen,
(d) no polymeric porogen, and
(e) dispersing agent for dispersing the solid particulate material throughout the dispersed organic phase,
wherein the polymerisable monomer composition;
(f) comprises at least one mono-ethylenically unsaturated monomer,
(g) comprises at least one crosslinking monomer having at least two ethylenically unsaturated groups that are separated by at least 4 consecutive acyclic atoms;
(h) comprises glycidyl methacrylate having a functional group; and
(i) does not comprise divinyl benzene;
(ii) polymerising the polymerisable monomer composition in the presence of the non-polymeric porogen and solid particulate material to form the porous polymeric matrix of the beads; and
(iii) reacting the functional groups provided by the glycidyl methacrylate on the porous polymer matrix of the so formed polymer beads with a reactant compound chosen from monoamines, diamines, and polyamine compounds, and their respective salts to provide amine or quaternary ammonium groups.

2. The process according to claim 1, wherein the at least one crosslinking monomer is selected from (i) ethylene glycol dimethacrylate, poly(ethylene glycol) dimethacrylate, methylene bisacrylamide, triethylene glycol diacrylate, triethylene glycol dimethacrylate, ethylene glycol diacrylate, diethylene glycol diacrylate, diethylene glycol dimethacrylate, glycerol diacrylate, glycerol dimethacrylate, 1,3-butanediol diacrylate and 1,3-butanediol dimethacrylate, 1,3-propanediol diacrylate, 1,3-propanediol dimethacrylate, 1,3-pentanediol diacrylate, 1,3-pentanediol dimethacrylate, 1,4-butanediol diacrylate, 1,4-butanediol dimethacrylate, hexamethylene glycol diacrylate, hexamethylene glycol dimethacrylate,decamethylene glycol diacrylate, decamethylene glycol dimethacrylate, 2,2-dimethylolpropane diacrylate, 2,2-dimethylolpropane dimethacrylate, tripropylene glycol diacrylate, tripropylene glycol dimethacrylate, 2,2-di(p-hydroxyphenyl)propane diacrylate, 2,2-di(p-hydroxyphenyl)propane dimethacrylate, 2,2,4-trimethyl-1,3-pentanediol diacrylate, 2,2,4-trimethyl-1,3-pentanediol dimethacrylate, tetraethylene glycol diacrylate, tetraethylene glycol dimethacrylate, and combinations thereof, and/or (ii) trimethylolpropane triacrylate, trimethylolpropane trimethacrylate, pentaerythritol triacrylate, pentaerythritol trimethacrylate, glycerol triacrylate, glycerol trimethacrylate, pentaerythritol tetraacrylate, pentaerythritol tetramethacrylate, tris(2-hydroxy ethyl) isocyanurate triacrylate, ethoxylated trimethylolpropane triacrylate, ethoxylated trimethylolpropane trimethacrylate, propoxylated trimethylolpropane triacrylate, propoxylated trimethylolpropane trimethacrylate, ethoxylated glycerol triacrylate, ethoxylated glycerol trimethacrylate, propoxylated glycerol triacrylate, propoxylated glycerol trimethacrylate, ethoxylated pentaerythritol triacrylate, ethoxylated pentaerythritol trimethacrylate, propoxylated pentaerythritol triacrylate, propoxylated pentaerythritol trimethacrylate, ethoxylated pentaerythritol tetraacrylate, ethoxylated pentaerythritol tetramethacrylate, propoxylated pentaerythritol tetraacrylate, propoxylated pentaerythritol tetramethacrylate, and combinations thereof.

3. The process according to any one of claims 1 to 2, wherein the solid particulate material is magnetic and is preferably selected from maghemite, magnetite, chromium dioxide, and combinations thereof.

4. The process according to any one of claims 1 to 3, wherein the non-polymeric porogen is selected from toluene, benzene, butanol, iso-octanol, cyclohexanol, dodecanol, isoamyl alcohol, tertiary amyl alcohol, methyl iso-butyl carbinol, ethyl acetate, butyl acetate, n-heptane, iso-octane, dichloroethane, trichloroethylene, dioctylphthalate, dibutyl adipate and combinations thereof.

5. Polymer beads having ion exchange capacity comprising a porous polymeric matrix having distributed therethrough solid particulate material and dispersing agent, the polymeric matrix (i) comprising polymerised monomer residues of (a) at least one mono- ethylenically unsaturated monomer, (b) at least one crosslinking monomer having at least two ethylenically unsaturated groups separated by at least 4 consecutive acyclic atoms, and (c) glycidyl methacrylate having a functional group that has been reacted with a reactant compound chosen from monoamines, diamines, and polyamine compounds, and their respective salts to provide the polymeric matrix of the beads with the ion exchange sites in the form of amine or quaternary ammonium groups, wherein the polymeric matrix comprises non-polymeric porogen, no polymeric porogen and no polymerised residues of divinyl benzene.

6. Polymer beads having ion exchange capacity comprising a porous polymeric matrix having distributed therethrough solid particulate material and dispersing agent, the polymeric matrix (i) comprising polymerised monomer residues of (a) at least one mono- ethylenically unsaturated monomer, (b) at least one crosslinking monomer having at least two ethylenically unsaturated groups separated by at least 4 consecutive acyclic atoms, and (c) glycidyl methacrylate having a functional group that has been reacted with a reactant compound chosen from monoamines, diamines, and polyamine compounds, and their respective salts to provide the polymeric matrix of the beads with the ion exchange sites in the form of amine or quaternary ammonium groups, wherein the polymeric matrix comprises no porogen and no polymerised residues of divinyl benzene.

7. The polymer beads according to claim 5, wherein the non-polymeric porogen is selected from toluene, benzene, butanol, iso-octanol, cyclohexanol, dodecanol, isoamyl alcohol, tertiary amyl alcohol, methyl iso-butyl carbinol, ethyl acetate, butyl acetate, n- heptane, iso-octane, dichloroethane, trichloroethylene, dioctylphthalate, dibutyl adipate and
combinations thereof.

8. The polymer beads according to any one of claims 5 to 7, wherein the at least one crosslinking monomer is selected from (i) ethylene glycol dimethacrylate, poly(ethylene glycol) dimethacrylate, methylene bisacrylamide, triethylene glycol diacrylate, triethylene glycol dimethacrylate, ethylene glycol diacrylate, diethylene glycol diacrylate, diethylene glycol dimethacrylate, glycerol diacrylate, glycerol dimethacrylate, 1,3-butanediol diacrylate and 1,3-butanediol dimethacrylate, 1,3-propanediol diacrylate, 1,3-propanediol dimethacrylate, 1,3-pentanediol diacrylate, 1,3-pentanediol dimethacrylate, 1,4-butanediol diacrylate, 1,4-butanediol dimethacrylate, hexamethylene glycol diacrylate, hexamethylene glycol dimethacrylate, decamethylene glycol diacrylate, decamethylene glycol dimethacrylate, 2,2-dimethylolpropane diacrylate, 2,2-dimethylolpropane dimethacrylate, tripropylene glycol diacrylate, tripropylene glycol dimethacrylate, 2,2-di(p- hydroxyphenyl)propane diacrylate, 2,2-di(p-hydroxyphenyl)propane dimethacrylate, 2,2,4- trimethyl-1,3-pentanediol diacrylate, 2,2,4-trimethyl-1,3-pentanediol dimethacrylate, tetraethylene glycol diacrylate, tetraethylene glycol dimethacrylate, and combinations thereof, and/or (ii) trimethylolpropane triacrylate, trimethylolpropane trimethacrylate, pentaerythritol triacrylate, pentaerythritol trimethacrylate, glycerol triacrylate, glycerol trimethacrylate, pentaerythritol tetraacrylate, pentaerythritol tetramethacrylate, tris(2-hydroxy ethyl) isocyanurate triacrylate, ethoxylated trimethylolpropane triacrylate, ethoxylated trimethylolpropane trimethacrylate, propoxylated trimethylolpropane triacrylate, propoxylated trimethylolpropane trimethacrylate, ethoxylated glycerol triacrylate, ethoxylated glycerol trimethacrylate, propoxylated glycerol triacrylate, propoxylated glycerol trimethacrylate, ethoxylated pentaerythritol triacrylate, ethoxylated pentaerythritol trimethacrylate, propoxylated pentaerythritol triacrylate, propoxylated pentaerythritol trimethacrylate, ethoxylated pentaerythritol tetraacrylate, ethoxylated pentaerythritol tetramethacrylate, propoxylated pentaerythritol tetraacrylate, propoxylated pentaerythritol tetramethacrylate, and combinations thereof.

9. The polymer beads according to any one of claims 5 to 8, wherein the solid particulate material is magnetic and preferably selected from maghemite, magnetite, chromium dioxide, and combinations thereof.

10. A method of treating an aqueous solution, the method comprising contacting said aqueous solution with polymer beads according to any one of claims 5 to 9.

11. A method according to claim 10 wherein said method involves removing dissolved organic carbon from an aqueous solution, said method comprising (i) contacting said aqueous solution with polymer beads and (ii) removing from the aqueous solution polymer beads having dissolved organic carbon adsorbed thereon.

12. A method according to claim 10 wherein said method involves removing ions from an aqueous solution, said method comprising (i) contacting said aqueous solution with polymer beads, and (ii) removing from the solution polymer beads that have undergone ion exchange with the ions to be removed.

## Patentansprüche

1. Verfahren zur Herstellung von Polymerkügelchen mit Ionenaustauschkapazität und einer porösen Polymermatrix, in der festes teilchenförmiges Material verteilt ist, wobei das Verfahren umfasst:
(i) Bereitstellen einer Dispersion mit einer dispergierten organischen Phase und einer kontinuierlichen wässrigen Phase, wobei die dispergierte organische Phase umfasst:
(a) polymerisierbare Monomerzusammensetzung,
(b) festes teilchenförmiges Material,
(c) nicht-polymeres Porogen,
(d) kein polymeres Porogen und
(e) Dispersionsmittel zum Dispergieren des festen teilchenförmigen Materials in der gesamten dispergierten organischen Phase,
wobei die polymerisierbare Monomerzusammensetzung;
(f) wenigstens ein monoethylenisch ungesättigtes Monomer umfasst,
(g) wenigstens ein vernetzendes Monomer mit wenigstens zwei ethylenisch ungesättigten Gruppen, die durch wenigstens 4 aufeinanderfolgende azyklische Atome getrennt sind, umfasst;
(h) Glycidylmethacrylat mit einer funktionellen Gruppe umfasst; und
(i) kein Divinylbenzol umfasst;
(ii) Polymerisieren der polymerisierbaren Monomerzusammensetzung in Gegenwart des nicht-polymeren Porogens und des festen teilchenförmigen Materials, um die poröse Polymermatrix der Kügelchen zu bilden; und
(iii) Umsetzen der funktionellen Gruppen, die durch das Glycidylmethacrylat auf der porösen Polymermatrix der so gebildeten Polymerkügelchen bereitgestellt werden, mit einer reaktiven Verbindung, die aus Monoaminen, Diaminen und Polyaminverbindungen und ihren jeweiligen Salzen ausgewählt ist, um Amin- oder quaternäre Ammoniumgruppen bereitzustellen.

2. Verfahren nach Anspruch 1, wobei das wenigstens eine vernetzende Monomer ausgewählt ist aus (i) Ethylenglykoldimethacrylat, Poly(ethylenglykol)dimethacrylat, Methylenbisacrylamid, Triethylenglykoldiacrylat, Triethylenglykoldimethacrylat, Ethylenglykoldiacrylat, Diethylenglykoldiacrylat, Diethylenglykoldimethacrylat, Glycerindiacrylat, Glycerindimethacrylat, 1,3-Butandioldiacrylat und 1,3-Butandioldimethacrylat, 1,3-Propandioldiacrylat, 1,3-Propandioldimethacrylat, 1,3-Pentandioldiacrylat, 1,3-Pentandioldimethacrylat, 1,4-Butandioldiacrylat, 1,4-Butandioldimethacrylat, Hexamethylenglykoldiacrylat, Hexamethylenglykoldimethacrylat, Decamethylenglykoldiacrylat, Decamethylenglykoldimethacrylat, 2,2-Dimethylolpropan-Diacrylat, 2,2-Dimethylolpropan-Dimethacrylat, Tripropylenglykoldiacrylat, Tripropylenglykoldimethacrylat, 2,2-Di(p-hydroxyphenyl)propandiacrylat, 2,2-Di(p-hydroxyphenyl)propandimethacrylat, 2,2,4-Trimethyl-1,3-pentandioldiacrylat, 2,2,4-Trimethyl1-1,3-pentandioldimethacrylat, Tetraethylenglykoldiacrylat, Tetraethylenglykoldimethacrylat und Kombinationen davon, und/oder (ii) Trimethylolpropantriacrylat, Trimethylolpropantrimethacrylat, Pentaerythrittriacrylat, Pentaerythrittrimethacrylat, Glycerintriacrylat, Glycerintrimethacrylat, Pentaerythrittetraacrylat, Pentaerythrittetramethacrylat, Tris(2-hydroxyethyl)isocyanurattriacrylat, ethoxyliertes Trimethylolpropantriacrylat, ethoxyliertes Trimethylolpropantrimethacrylat, propoxyliertes Trimethylolpropantriacrylat, propoxyliertes Trimethylolpropantrimethacrylat, ethoxyliertes Glycerintriacrylat, ethoxyliertes Glycerintrimethacrylat, propoxyliertes Glycerintriacrylat, propoxyliertes Glycerintrimethacrylat, ethoxyliertes Pentaerythrittriacrylat, ethoxyliertes Pentaerythrittrimethacrylat, propoxyliertes Pentaerythrittriacrylat, propoxyliertes Pentaerythrittrimethacrylat, ethoxyliertes Pentaerythrittetraacrylat, ethoxyliertes Pentaerythrittetramethacrylat, propoxyliertes Pentaerythrittetraacrylat, propoxyliertes Pentaerythrittetramethacrylat und Kombinationen davon.

3. Verfahren nach einem der Ansprüche 1 bis 2, wobei das feste teilchenförmige Material magnetisch ist und vorzugsweise aus Maghemit, Magnetit, Chromdioxid und Kombinationen davon ausgewählt wird.

4. Verfahren nach einem der Ansprüche 1 bis 3, wobei das nicht-polymere Porogen aus Toluol, Benzol, Butanol, Iso-Octanol, Cyclohexanol, Dodecanol, Isoamylalkohol, tertiärem Amylalkohol, Methylisobutylcarbinol, Ethylacetat, Butylacetat, n-Heptan, Iso-Octan, Dichlorethan, Trichlorethylen, Dioctylphthalat, Dibutyladipat und Kombinationen davon ausgewählt ist.

5. Polymerkügelchen mit Ionenaustauschkapazität, umfassend eine poröse Polymermatrix, durch die ein festes teilchenförmiges Material und ein Dispersionsmittel verteilt sind, wobei die Polymermatrix (i) polymerisierte Monomerreste von (a) wenigstens einem monoethylenisch ungesättigten Monomer, (b) wenigstens einem vernetzenden Monomer mit wenigstens zwei ethylenisch ungesättigten Gruppen, die durch wenigstens 4 aufeinanderfolgende azyklische Atome getrennt sind und (c) Glycidylmethacrylat mit einer funktionellen Gruppe, die mit einer reaktiven Verbindung, ausgewählt aus Monoaminen, Diaminen und Polyaminverbindungen und ihren jeweiligen Salzen, umgesetzt wurde, um die Polymermatrix der Kügelchen mit den Ionenaustauschstellen in Form von Amin- oder quaternären Ammoniumgruppen zu versehen, umfasst, wobei die Polymermatrix nicht-polymeres Porogen, kein polymeres Porogen und keine polymerisierten Reste von Divinylbenzol umfasst.

6. Polymerkügelchen mit Ionenaustauschkapazität, umfassend eine poröse Polymermatrix, durch die ein festes teilchenförmiges Material und ein Dispersionsmittel verteilt sind, wobei die Polymermatrix (i) polymerisierte Monomerreste von (a) wenigstens einem monoethylenisch ungesättigten Monomer, (b) wenigstens einem vernetzenden Monomer mit wenigstens zwei ethylenisch ungesättigten Gruppen, die durch wenigstens 4 aufeinanderfolgende azyklische Atome getrennt sind und (c) Glycidylmethacrylat mit einer funktionellen Gruppe, die mit einer reaktiven Verbindung, ausgewählt aus Monoaminen, Diaminen und Polyaminverbindungen und ihren jeweiligen Salzen, umgesetzt wurde, um die Polymermatrix der Kügelchen mit den Ionenaustauschstellen in Form von Amin- oder quaternären Ammoniumgruppen zu versehen, umfasst, wobei die Polymermatrix kein Porogen und keine polymerisierten Reste von Divinylbenzol umfasst.

7. Polymerkügelchen nach Anspruch 5, wobei das nicht-polymere Porogen aus Toluol, Benzol, Butanol, Iso-Octanol, Cyclohexanol, Dodecanol, Isoamylalkohol, tertiärem Amylalkohol, Methylisobutylcarbinol, Ethylacetat, Butylacetat, n-Heptan, Iso-Octan, Dichlorethan, Trichlorethylen, Dioctylphthalat, Dibutyladipat und Kombinationen davon ausgewählt ist.

8. Polymerkügelchen nach einem der Ansprüche 5 bis 7, wobei das wenigstens eine vernetzende Monomer aus (i) Ethylenglykoldimethacrylat, Poly(ethylenglykol)dimethacrylat, Methylenbisacrylamid, Triethylenglykoldiacrylat, Triethylenglykoldimethacrylat, Ethylenglykoldiacrylat, Diethylenglykoldiacrylat, Diethylenglykoldimethacrylat, Glycerindiacrylat, Glycerindimethacrylat, 1,3-Butandioldiacrylat und 1,3-Butandioldimethacrylat, 1,3-Propandioldiacrylat, 1,3-Propandiol-Dimethacrylat, 1,3-Pentandioldiacrylat, 1,3-Pentandioldimethacrylat, 1,4-Butandioldiacrylat, 1,4-Butandioldimethacrylat, Hexamethylenglykoldiacrylat, Hexamethylenglykoldimethacrylat, Decamethylenglykoldiacrylat, Decamethylenglykoldimethacrylat, 2,2-Dimethylolpropan-Diacrylat, 2,2-Dimethylolpropan-Dimethacrylat, Tripropylenglykoldiacrylat, Tripropylenglykoldimethacrylat, 2,2-Di(p-hydroxyphenyl)propandiacrylat, 2,2-Di(p-hydroxyphenyl)propandimethacrylat, 2,2,4- Trimethyl-1,3-Pentandioldiacrylat, 2,2,4-Trimethyl1-1,3-pentandioldimethacrylat, Tetraethylenglykoldiacrylat, Tetraethylenglykoldimethacrylat, und Kombinationen davon, und/oder (ii) Trimethylolpropantriacrylat, Trimethylolpropantrimethacrylat, Pentaerythrittriacrylat, Pentaerythrittrimethacrylat, Glycerintriacrylat, Glycerintrimethacrylat, Pentaerythrittetraacrylat, Pentaerythrittetramethacrylat, Tris(2-hydroxyethyl)isocyanurattriacrylat, ethoxyliertes Trimethylolpropantriacrylat, ethoxyliertes Trimethylolpropantrimethacrylat, propoxyliertes Trimethylolpropantriacrylat, propoxyliertes Trimethylolpropantrimethacrylat, ethoxyliertes Glycerintriacrylat, ethoxyliertes Glycerintrimethacrylat, propoxyliertes Glycerintriacrylat, propoxyliertes Glycerintrimethacrylat, ethoxyliertes Pentaerythrittriacrylat, ethoxyliertes Pentaerythrittrimethacrylat, propoxyliertes Pentaerythrittriacrylat, propoxyliertes Pentaerythrittrimethacrylat, ethoxyliertes Pentaerythrittetraacrylat, ethoxyliertes Pentaerythrittetramethacrylat, propoxyliertes Pentaerythrittetraacrylat, propoxyliertes Pentaerythrittetramethacrylat, und Kombinationen davon ausgewählt ist.

9. Polymerkügelchen nach einem der Ansprüche 5 bis 8, wobei das feste teilchenförmige Material magnetisch ist und vorzugsweise aus Maghemit, Magnetit, Chromdioxid und Kombinationen davon ausgewählt ist.

10. Verfahren zur Behandlung einer wässrigen Lösung, wobei das Verfahren das Inkontaktbringen der wässrigen Lösung mit Polymerkügelchen nach einem der Ansprüche 5 bis 9 umfasst.

11. Verfahren nach Anspruch 10, wobei das Verfahren das Entfernen von gelöstem organischem Kohlenstoff aus einer wässrigen Lösung umfasst, wobei das Verfahren (i) das Inkontaktbringen der wässrigen Lösung mit Polymerkügelchen und (ii) das Entfernen von Polymerkügelchen mit daran adsorbiertem gelöstem organischem Kohlenstoff aus der wässrigen Lösung umfasst.

12. Verfahren nach Anspruch 10, wobei das Verfahren das Entfernen von Ionen aus einer wässrigen Lösung umfasst, wobei das Verfahren (i) das Inkontaktbringen der wässrigen Lösung mit Polymerkügelchen und (ii) das Entfernen von Polymerkügelchen, die einem Ionenaustausch mit den zu entfernenden Ionen unterzogen wurden, aus der Lösung umfasst.

## Revendications

1. Procédé pour la production de billes de polymère ayant une capacité d'échange d'ions et une matrice polymère poreuse dans laquelle est distribué un matériau particulaire solide ; le procédé comprenant :
(i) la fourniture d'une dispersion ayant une phase organique dispersée et une phase aqueuse continue, la phase organique dispersée comprenant :
(a) une composition monomère polymérisable ;
(b) un matériau particulaire solide,
(c) un porogène non-polymère,
(d) pas de porogène polymère, et
(e) un agent dispersant pour disperser le matériau particulaire solide d'un bout à l'autre de la phase organique dispersée,
dans lequel la composition monomère polymérisable ;
(f) comprend au moins un monomère monoéthyléniquement insaturé,
(g) comprend au moins un monomère de réticulation ayant au moins deux groupes éthyléniquement insaturés qui sont séparés par au moins 4 atomes acycliques consécutifs ;
(h) comprend du méthacrylate de glycidyle ayant un groupe fonctionnel ; et
(i) ne comprend pas de divinylbenzène ;
(ii) la polymérisation de la composition monomère polymérisable en présence des porogène non-polymère et matériau particulaire solide pour former la matrice polymère poreuse des billes ; et
(iii) la réaction des groupes fonctionnels fournis par le méthacrylate de glycidyle sur la matrice polymère poreuse des billes de polymère ainsi formées avec un composé réactif choisi parmi des monoamines, diamines, et composés de polyamine, et leurs sels respectifs pour fournir des groupes amine ou ammonium quaternaire.

2. Procédé selon la revendication 1, dans lequel le au moins un monomère de réticulation est choisi parmi (i) diméthacrylate d'éthylène glycol, diméthacrylate de poly(éthylène glycol), méthylène bisacrylamide, diacrylate de triéthylène glycol, diméthacrylate de triéthylène glycol, diacrylate d'éthylène glycol, diacrylate de diéthylène glycol, diméthacrylate de diéthylène glycol, diacrylate de glycérol, diméthacrylate de glycérol, diacrylate de 1,3-butanediol et diméthacrylate de 1,3-butanediol, diacrylate de 1,3-propanediol, diméthacrylate de 1,3-propanediol, diacrylate de 1,3-pentanediol, diméthacrylate de 1,3-pentanediol, diacrylate de 1,4-butanediol, diméthacrylate de 1,4-butanediol, diacrylate d'hexaméthylène glycol, diméthacrylate d'hexaméthylène glycol, diacrylate de décaméthylène glycol, diméthacrylate de décaméthylène glycol, diacrylate de 2,2-diméthylolpropane, diméthacrylate de 2,2-diméthylolpropane, diacrylate de tripropylène glycol, diméthacrylate de tripropylène glycol, diacrylate de 2,2-di(p-hydroxyphényl)propane, diméthacrylate de 2,2-di(p-hydroxyphényl)propane, diacrylate de 2,2,4-triméthyl-1,3-pentanediol, diméthacrylate de 2,2,4-triméthyl-1,3-pentanediol, diacrylate de tétraéthylène glycol, diméthacrylate de tétraéthylène glycol, et combinaisons de ceux-ci, et/ou (ii) triacrylate de triméthylolpropane, triméthacrylate de triméthylolpropane, triacrylate de pentaérythritol, triméthacrylate de pentaérythritol, triacrylate de glycérol, triméthacrylate de glycérol, tétraacrylate de pentaérythritol, tétraméthacrylate de pentaérythritol, triacrylate de tris(2-hydroxy éthyl) isocyanurate, triacrylate de triméthylolpropane éthoxylé, triméthacrylate de triméthylolpropane éthoxylé, triacrylate de triméthylolpropane propoxylé, triméthacrylate de triméthylolpropane propoxylé, triacrylate de glycérol éthoxylé, triméthacrylate de glycérol éthoxylé, triacrylate de glycérol propoxylé, triméthacrylate de glycérol propoxylé, triacrylate de pentaérythritol éthoxylé, triméthacrylate de pentaérythritol éthoxylé, triacrylate de pentaérythritol propoxylé, triméthacrylate de pentaérythritol propoxylé, tétraacrylate de pentaérythritol éthoxylé, tétraméthacrylate de pentaérythritol éthoxylé, tétraacrylate de pentaérythritol propoxylé, tétraméthacrylate de pentaérythritol propoxylé, et combinaisons de ceux-ci.

3. Procédé selon l'une quelconque des revendications 1 à 2, dans lequel le matériau particulaire solide est magnétique et est de préférence choisi parmi la maghémite, la magnétite, le dioxyde de chrome, et des combinaisons de ceux-ci.

4. Procédé selon l'une quelconque des revendications 1 à 3, dans lequel le porogène non-polymère est choisi parmi le toluène, benzène, butanol, iso-octanol, cyclohexanol, dodécanol, alcool isoamylique, alcool amylique tertiaire, méthyl isobutyl carbinol, acétate d'éthyle, acétate de butyle, n-heptane, iso-octane, dichloroéthane, trichloroéthylène, phtalate de dioctyle, adipate de dibutyle et combinaisons de ceux-ci.

5. Billes de polymère ayant une capacité d'échange d'ions comprenant une matrice polymère poreuse ayant distribués d'un bout à l'autre de celle-ci un matériau particulaire solide et un agent dispersant, la matrice polymère (i) comprenant des résidus monomères polymérisés de (a) au moins un monomère mono-éthyléniquement insaturé, (b) au moins un monomère de réticulation ayant au moins deux groupes éthyléniquement insaturés séparés par au moins 4 atomes acycliques consécutifs, et (c) du méthacrylate de glycidyle ayant un groupe fonctionnel qui a réagi avec un composé réactif choisi parmi des monoamines, diamines, et composés de polyamine, et leurs sels respectifs pour fournir la matrice polymère des billes avec les sites d'échange d'ions dans la forme de groupes amine ou ammonium quaternaire, dans lesquelles la matrice polymère comprend un porogène non-polymère, pas de porogène polymère et pas de résidus polymérisés de divinylbenzène.

6. Billes de polymère ayant une capacité d'échange d'ions comprenant une matrice polymère poreuse ayant distribués d'un bout à l'autre de celle-ci un matériau particulaire solide et un agent dispersant, la matrice polymère (i) comprenant des résidus monomères polymérisés de (a) au moins un monomère mono-éthyléniquement insaturé, (b) au moins un monomère de réticulation ayant au moins deux groupes éthyléniquement insaturés séparés par au moins 4 atomes acycliques consécutifs, et (c) du méthacrylate de glycidyle ayant un groupe fonctionnel qui a réagi avec un composé réactif choisi parmi des monoamines, diamines, et composés de polyamine, et leurs sels respectifs pour fournir la matrice polymère des billes avec les sites d'échange d'ions dans la forme de groupes amine ou ammonium quaternaire, dans lesquelles la matrice polymère ne comprend pas de porogène et pas de résidus polymérisés de divinylbenzène.

7. Billes de polymère selon la revendication 5, dans lesquelles le porogène non polymère est choisi parmi le toluène, benzène, butanol, iso-octanol, cyclohexanol, dodécanol, alcool isoamylique, alcool amylique tertiaire, méthyl iso-butyl carbinol, acétate d'éthyle, acétate de butyle, n-heptane, iso-octane, dichloroéthane, trichloroéthylène, phtalate de dioctyle, adipate de dibutyle et combinaisons de ceux-ci.

8. Billes de polymère selon l'une quelconque des revendications 5 à 7, dans lesquelles le au moins un monomère de réticulation est choisi parmi (i) diméthacrylate d'éthylène glycol, diméthacrylate de poly(éthylène glycol), méthylène bisacrylamide, diacrylate de triéthylène glycol, diméthacrylate de triéthylène glycol, diacrylate d'éthylène glycol, diacrylate de diéthylène glycol, diméthacrylate de diéthylène glycol, diacrylate de glycérol, diméthacrylate de glycérol, diacrylate de 1,3-butanediol et diméthacrylate de 1,3-butanediol, diacrylate de 1,3-propanediol, diméthacrylate de 1,3-propanediol, diacrylate de 1,3-pentanediol, diméthacrylate de 1,3-pentanediol, diacrylate de 1,4-butanediol, diméthacrylate de 1,4-butanediol, diacrylate d'hexaméthylène glycol, diméthacrylate d'hexaméthylène glycol, diacrylate de décaméthylène glycol, diméthacrylate de décaméthylène glycol, diacrylate de 2,2-diméthylolpropane, diméthacrylate de 2,2-diméthylolpropane, diacrylate de tripropylène glycol, diméthacrylate de tripropylène glycol, diacrylate de 2,2-di(p-hydroxyphényl)propane, diméthacrylate de 2,2-di(p-hydroxyphényl)propane, diacrylate de 2,2,4-triméthyl-1,3-pentanediol, diméthacrylate de 2,2,4-triméthyl-1,3-pentanediol, diacrylate de tétraéthylène glycol, diméthacrylate de tétraéthylène glycol, et combinaisons de ceux-ci, et/ou (ii) triacrylate de triméthylolpropane, triméthacrylate de triméthylolpropane, triacrylate de pentaérythritol, triméthacrylate de pentaérythritol, triacrylate de glycérol, triméthacrylate de glycérol, tétraacrylate de pentaérythritol, tétraméthacrylate de pentaérythritol, triacrylate de tris(2-hydroxy éthyl) isocyanurate, triacrylate de triméthylolpropane éthoxylé, triméthacrylate de triméthylolpropane éthoxylé, triacrylate de triméthylolpropane propoxylé, triméthacrylate de triméthylolpropane propoxylé, triacrylate de glycérol éthoxylé, triméthacrylate de glycérol éthoxylé, triacrylate de glycérol propoxylé, triméthacrylate de glycérol propoxylé, triacrylate de pentaérythritol éthoxylé, triméthacrylate de pentaérythritol éthoxylé, triacrylate de pentaérythritol propoxylé, triméthacrylate de pentaérythritol propoxylé, tétraacrylate de pentaérythritol éthoxylé, tétraméthacrylate de pentaérythritol éthoxylé, tétraacrylate de pentaérythritol propoxylé, tétraméthacrylate de pentaérythritol propoxylé, et combinaisons de ceux-ci.

9. Billes de polymère selon l'une quelconque des revendications 5 à 8, dans lesquelles le matériau particulaire solide est magnétique et est de préférence choisi parmi la maghémite, la magnétite, le dioxyde de chrome, et des combinaisons de ceux-ci.

10. Procédé de traitement d'une solution aqueuse, le procédé comprenant la mise en contact de ladite solution aqueuse avec des billes de polymère selon l'une quelconque des revendications 5 à 9.

11. Procédé selon la revendication 10, dans lequel ledit procédé implique l'élimination de carbone organique dissous à partir d'une solution aqueuse, ledit procédé comprenant (i) la mise en contact de ladite solution aqueuse avec des billes de polymère et (ii) l'élimination à partir de la solution aqueuse des billes de polymère présentant du carbone organique dissous adsorbé sur leur dessus.

12. Procédé selon la revendication 10, dans lequel ledit procédé implique l'élimination d'ions à partir d'une solution aqueuse, ledit procédé comprenant (i) la mise en contact de ladite solution aqueuse avec des billes de polymère, et (ii) l'élimination à partir de la solution des billes de polymère qui ont réalisé un échange d'ions avec les ions à éliminer.
